# EUROPÄISCHE PATENTSCHRIFT

(11) **EP 2 772 624 B1**
(45) Veröffentlichungstag und Bekanntmachung des Hinweises auf die Patenterteilung: **06.05.2020**
(21) Anmeldenummer: 14157080.4
(22) Anmeldetag: 27.02.2014
(51) Int. Cl.: F02B 41/04, F02B 75/04, F01B 9/04, F02B 75/32

(54) **BRENNKRAFTMASCHINE ARBEITEND NACH DEM REALEN VIERTAKT-ATKINSON-ZYKLUS UND VERFAHREN ZU IHRER LASTSTEUERUNG**
INTERNAL COMBUSTION ENGINE OPERATING ACCORDING TO THE REAL FOUR-STROKE ATKINSON CYCLE AND METHOD FOR LOAD CONTROL
MOTEUR À COMBUSTION INTERNE FONCTIONNANT SELON LE CYCLE D'ATKINSON À QUATRE TEMPS ET SON PROCÉDÉ DE CONTÔLE DE LA CHARGE

(30) Priorität: 27.02.2013 DE 102013003682
(43) Veröffentlichungstag der Anmeldung: 03.09.2014
(73) Patentinhaber: Gheorghiu, Victor, 22145 Hamburg (DE)
(72) Erfinder: Gheorghiu, Victor-Mihai, 22359 Hamburg (DE)

(56) Entgegenhaltungen:
- EP-A1- 0 708 274
- WO-A1-98/48158
- DE-A1- 3 927 535
- JP-A- 2002 349 303
- US-A- 5 799 636
- US-A1- 2002 185 101
- US-A1- 2012 291 755

## Beschreibung

Die vorliegende Erfindung betrifft Brennkraftmaschinen mit variablen asymmetrischen Kurbeltrieben, die nach dem Viertakt-Atkinson-Zyklus arbeiten, und Verfahren zu ihrer Laststeuerung.

### Stand der Technik

Die Atkinson-Zyklen sind durch verkürzte effektive Verdichtungshübe in Bezug auf die Expansionshübe charakterisiert. Weil dadurch die verrichtete Verdichtungsarbeit reduziert wird, erreichen Atkinson-Zyklen höhere thermische Wirkungsgrade als klassische Seiliger-Zyklen.

Brennkraftmaschinen, arbeitend nach Atkinson-Zyklus, sind nach dem Stand der Technik durch folgende Konstruktionsmerkmale bekannt:
- klassische Kurbeltriebe, wobei alle Kolbenhübe gleichlang sind und damit auch als symmetrische Kurbeltriebe bezeichnet werden,
- halbsymmetrische Kurbeltriebe, wobei paarweise die Ansaug- und Verdichtungshübe bzw. Expansion- und Ausschiebehübe gleichlang sind, und
- voll-asymmetrische Kurbeltriebe, wobei alle Kolbenhübe unterschiedlich lang sind.

Beispielsweise sind Brennkraftmaschinen arbeitend nach Viertakt-Atkinson-Zyklen mit symmetrischen Kurbeltrieben bekannt, bei denen die Einlassventile viel später als üblich während der Verdichtung geschlossen werden, so dass ein beachtlicher Anteil der im Zylinder angesaugten frischen Ladung zurück in die Ansaugkanäle ausgestoßen wird. Dadurch wird der effektive (aber nicht der geometrische) Verdichtungshub als Folge der geminderten Zylinderfüllung im Vergleich zum Expansionshub reduziert und somit ein so genannter quasi-Atkinson-Zyklus verwirklicht. Weil der Verdichtungsenddruck durch Minderung der Zylinderfüllung abnimmt, wird das geometrische Verdichtungsverhältnis als Gegenmaßnahme üblicherweise entsprechend angehoben (EP 1754872 B1). Bei den bekannten freisaugenden und aufgeladenen Motoren ist diese Implementierung des Atkinson-Zyklus wegen der verlustbehafteten Arbeit beim Ansaugen und Ausschieben eines Anteils der frischen Ladung (d.h. wegen der gedrosselten Hin- und Rück-Strömung durch die Öffnungen der Einlassventile) nicht optimal, weil dadurch die erwünschte hohe Steigerung des thermischen Wirkungsgrades weitgehend nicht erfüllt wird.

Im Gegenteil dazu können asymmetrische Kurbeltriebe in Brennkraftmaschinen eingesetzt werden, die geometrisch kürzere Hübe für Ansaugen und Verdichtung und längere Hübe für Expansion und Ausschieben aufweisen (US 1278563A, US 1326129A). Damit ist die Notwendigkeit der gedrosselten Hin- und Rück-Strömung durch die Einlassventile eliminiert, weil nur die tatsächlich im Zylinder benötigte Ladungsmasse durch den verkürzten Ansaughub gesaugt wird. Diese Kurbeltriebe erlauben somit eine echte Implementierung der Atkinson-Zyklen, die dann höhere Wirkungsgrade als die der klassischen Zyklen von Otto- und Diesel-Motoren aufweisen. Falls der asymmetrische Kurbeltrieb auch die Anpassung des Verdichtungsverhältnisses und der Hublängen während des Motorbetriebs erlaubt (US 4044629A, US 5927236A), kann der effektive Wirkungsgrad solcher Brennkraftmaschinen zusätzlich gesteigert werden.

Asymmetrische Kurbeltriebe können nach dem Stand der Technik in unterschiedlichen Bauarten/Ausführungen realisiert werden. Von diesen wird hier nur die Bauart der Umlauf-Zahnräder-Kurbelgetrieben, auch als Zahnrad-Planeten-Kurbelgetriebe (ZPK) benannt, berücksichtigt. Bei diesen ZKP dient der Kurbelzapfen als Steg und führt damit das auf ihn radialgelagerte Planetenrad mit, während entweder das Hohlrad oder das Sonnenrad festgehalten wird. Das Planetenrad ist mit einem exzentrisch angeordneten Zapfen (weiterhin als Exzenterzapfen benannt) fest verbunden, auf dem das große Pleuelauge radialgelagert ist. Der hohle Exzenterzapfen ist seinerseits auf dem Kurbelzapfen radialgelagert und damit muss sein Außendurchmesser größer sein als die Summe von Kurbelzapfenaußendurchmesser und Exzentrizität (Abstand zwischen Drehachsen des Exzenterzapfens und des Kurbelzapfens).

Während zwei Kurbelumdrehungen beschreibt der Exzenterzapfen - und somit das mitgeführte große Pleuelauge - eine von Hypozykloide, Deltoid, Kardioide oder Trifolium abgewandelte Kurve. Die Übersetzung im ZPK wird so ausgelegt, dass die Winkelgeschwindigkeit des Planetenrads (und somit des Exzenterzapfens) die Hälfte der Winkelgeschwindigkeit der Kurbelwelle ausmacht und damit während zwei Kurbelumdrehungen die vier charakteristischen - jedoch in diesem Fall ungleichlangen - Kolbenhübe von Viertaktmotoren entstehen.

Eine geringfügige Verdrehung entweder des Hohlrads (US 4044629A) oder des Sonnenrads (US 5927236A) ermöglicht zusätzlich die Verstellung des Verdichtungsverhältnisses und (eher unbedeutend) der Hublängen.

Die Exzentrizität kann in den Lösungsansetzen US 1326129A, US 4044629A und US 5927236A nicht sinnvoll lang ausgelegt werden, um vorteilhafte große Hubunterschiede zu erreichen, weil das große Pleuelauge in diesen Lösungsansetzen gleichzeitig Kurbel- und Exzenterzapfen umrundet. Demzufolge muss der Innendurchmesser des großen Pleuelauges viel zu groß und damit hinderlich für den ganzen Kurbeltrieb und seinen Massenausgleich ausgelegt werden. Dabei ist der maximale Hubunterschied zwischen Verdichtung und Expansion, der neben dem Kurbelradius maßgebend von der Größe der Exzentrizität bestimmt ist, viel zu gering, um damit ausgeprägte asymmetrische Atkinson-Zyklen erreichen zu können. In der zweiten Ausführung in US 4044629A mit Sonnenrad und Planeten-Stirnrad muss die Kurbelwelle nach jeder Kröpfung unterbrochen und über eine Zusatzwelle und zusätzliche Zahnräder überbrückt werden. Damit unterscheiden sich die Ausführungen in US 1326129A, US 4044629A und US 5927236A maßgeblich von den Ausführungsvarianten dieser Erfindung.

In US 5465648A wird ein Kurbeltrieb mit einer gebauten Kurbelwelle vorgeschlagen, die mit je zwei Planetenrädern und Hohlrädern auf jede Kurbelwellenkröpfung, mit einer 2:3 Übersetzung zwischen Planetenrädern und Hohlrädern und mit einer Exzenterkröpfung ausgerüstet ist, wobei die Exzentrizitätsgröße sich beliebig auslegen lässt. Ziel ist hier aber nicht ein Kurbeltrieb mit asymmetrischen Hüben zu realisieren, um reale Atkinson-Zyklen zu implementieren, sondern nur den Kolben in seiner UT-Lage nahezu unbeweglich zu halten, um mehr Zeit für das Ansaugen zu schaffen. Um dies zu erreichen, sind sowohl die Kurbelwellenkröpfung als auch die Exzenterkröpfung zu ihrer Synchronisation entlang der Zylinderachse zum Zylinderkopf gerichtet, wenn der Kolben sich in seinem Zünd-OT (ZOT) befindet. Damit unterscheidet sich die Ausführung in US 5465648A maßgeblich von den Ausführungsvarianten dieser Erfindung.

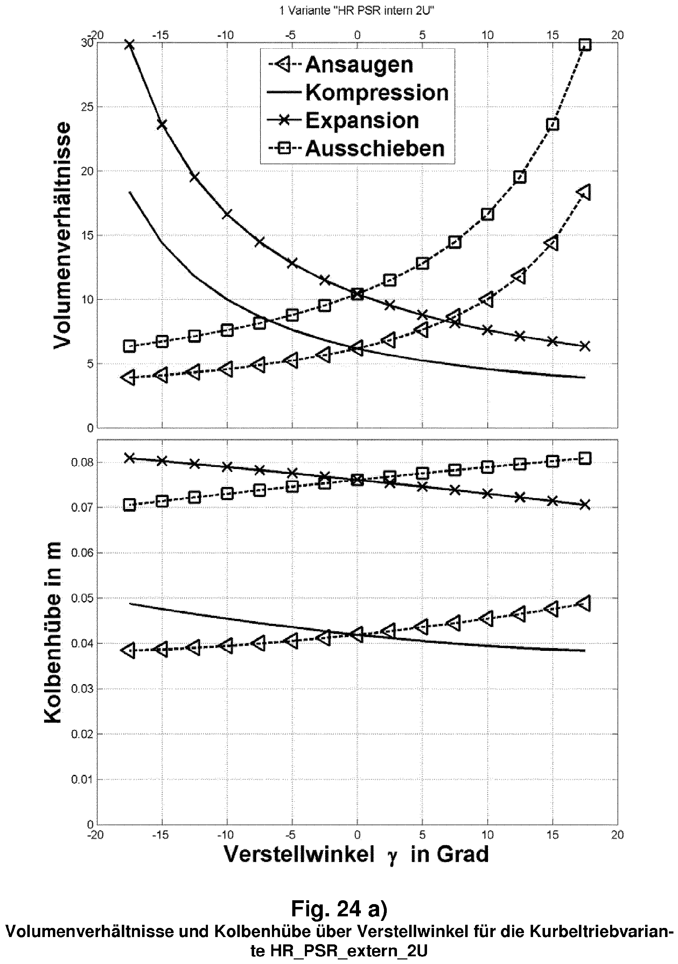

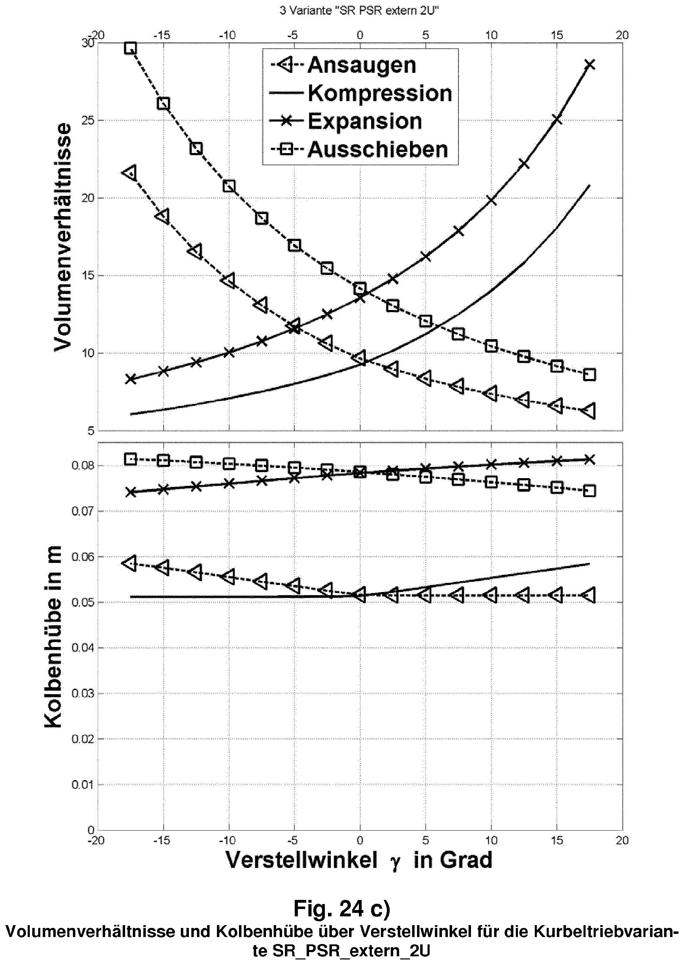

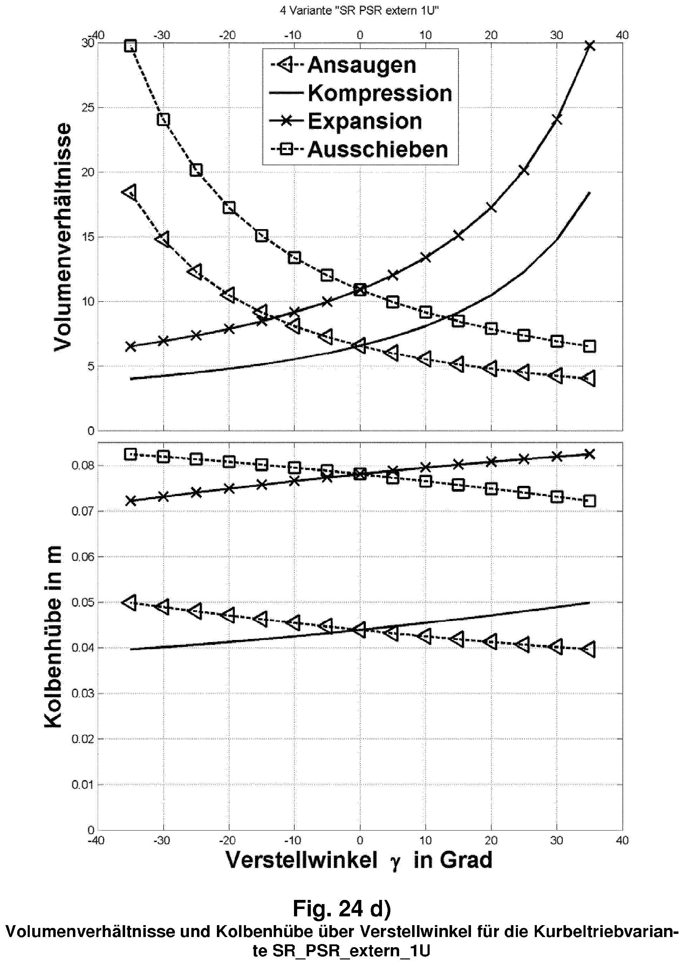

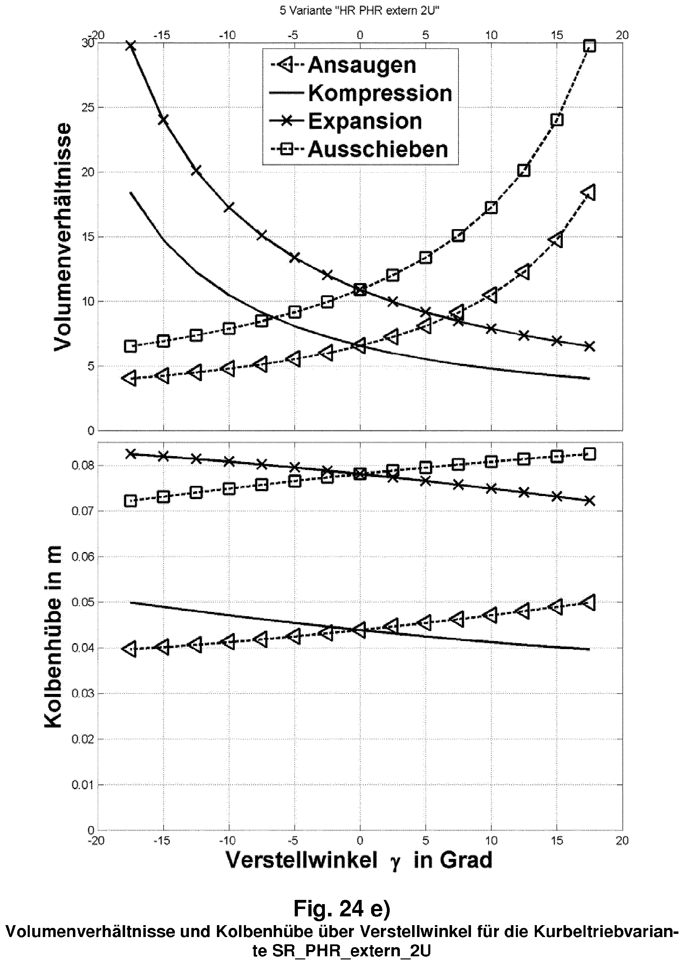

In US 2002/0185101A1 wird ein Kurbeltrieb mit einer gebauten Kurbelwelle vorgeschlagen, die mit je zwei Planetenrädern und Sonnenrädern auf jede Kurbelwellenkröpfung, mit einer 1:1 Übersetzung zwischen Planetenrädern und Sonnenrädern und mit einer Exzenterkröpfung ausgerüstet ist, wobei die Exzentrizitätsgröße sich beliebig auslegen lässt. Im Gegenteil zu einem Ziel dieser Erfindung (beispielsweise ausgedrückt in den Ansprüchen 8 und 9), ist das Hauptziel im US 2002/0185101A1 das Drehmoment im Expansionshub zu erhöhen. Das wird durch die Auslegung des Verdrehungswinkels der Sonnenräder in einem Bereich erreicht, in dem der Pleuelneigungswinkel während der Expansion einen größten Werte annimmt. Dafür wurde die Nullstellung des Verdrehungswinkels - d.h. der Winkel zwischen Kurbelwellenkröpfung und Exzenterkröpfung zu ihrer Synchronisation, wenn der Kolben sich in seinem Zünd-OT (ZOT) befindet - auf etwa 145° festgelegt. Der ausgewählte Verdrehungswinkelbereich überdeckt nur etwa ein Viertel des Verstellwinkelbereichs der Ausführungsvariante SR_PSR_extern_1U dieser Erfindung, d.h. nur den Bereich mit dem Winkel g größer als 15° (s. Fig. 24d), um dem verfolgten Hauptziel gerecht zu werden. Damit unterscheidet sich die Ausführung in US 2002/0185101A1 maßgeblich von der Ausführungsvariante SR_PSR_extern_1U (s. unten) dieser Erfindung.

Im Folgenden wird die Erfindung in mehreren Ausführungsbeispielen anhand der skizzierten Figuren näher erläutert. Es zeigen:
- Figur 1: eine Ansicht der Kurbeltriebvariante HR_PSR_intern_2U der Erfindung für einen Zwei-Zylinder-Kurbeltrieb (s. unten die Listen der verwendeten Abkürzungen und Bezeichnungen),
- Figur 2: einen Schnitt durch die Kurbeltriebvariante aus Fig. 1. Der Kurbeltriebteil des linken Zylinders befindet sich in der Expansions-UT-Lage (EUT),
- Figur 3: eine 3D-Ansicht der Exzenterkröpfung der Kurbeltriebvariante aus Fig. 1,
- Figur 4: eine 3D-Ansicht der Kurbeltriebvariante aus Fig. 1,
- Figur 5: eine 3D-Ansicht der Kurbeltriebvariante HR_PSR_intern_1U der Erfindung für einen Zwei-Zylinder-Kurbeltrieb,
- Figur 6: einen Schnitt durch die Kurbeltriebvariante aus Fig. 5,
- Figur 7: eine 3D-Ansicht der Exzenterkröpfung der Kurbeltriebvariante aus Fig. 5,
- Figur 8: 3D-Ansichten der Exzenterkröpfungen für die Kurbeltriebvarianten HR_PSR_intern_1U, HR_PSR_mixt_1U und HR_PSR_extern_1U,
- Figur 9: eine 3D-Ansicht und eine Explosionsansicht der Kurbeltriebvariante HR_PSR_mixt_1U,
- Figur 10: Ansichten der Pleuelgeige und der Kurbeltriebvariante aus Fig. 9 in Nullstellung (links) und in einer verstellten Lage,
- Figur 11: eine Ansicht der Kurbeltriebvariante SR_PSR_extern_2U der Erfindung für einen Zwei-Zylinder-Kurbeltrieb,
- Figur 12: einen Schnitt durch die Kurbeltriebvariante aus Fig. 11. Der Kurbeltriebteil des linken Zylinders befindet sich in der Expansions-UT-Lage (EUT),
- Figur 13: eine 3D-Ansicht der Sonnenräder (12) und eines Teils des Kurbelgehäuses (15) aus Fig. 11,
- Figur 14: eine 3D-Ansicht der Exzenterkröpfung der Kurbeltriebvariante aus Fig. 11,
- Figur 15: eine Ansicht der Kurbeltriebvariante SR_PSR_extern_1U der Erfindung für einen Zwei-Zylinder-Kurbeltrieb,
- Figur 16: einen Schnitt durch die Kurbeltriebvariante aus Fig. 15. Der Kurbeltriebteil des rechten Zylinders befindet sich in der Expansions-UT-Lage (EUT),
- Figur 17: eine 3D-Explosionsansicht der Kurbeltriebvariante aus Fig. 15,
- Figur 18: eine Ansicht der Kurbeltriebvariante SR_PHR_extern_2U der Erfindung für einen Zylinder des ganzen Kurbeltriebs,
- Figur 19: einen Schnitt durch die Kurbeltriebvariante aus Fig. 18 in der Expansions-UT-Lage (EUT),
- Figur 20: eine 3D-Ansicht der Exzenterkröpfung der Kurbeltriebvariante aus Fig. 18,
- Figur 21: schematische aber maßstäbliche Darstellungen der Kurbeltriebvarianten in der Zünd-OT-Lage (ZOT), um den notwendigen Bauraum (22) beim Einhalten von identischen maximalen Hublängen vergleichen zu können, und die Ortskurven (23) des Exzenterzapfens (somit der Achse des großen Pleuelauges),
- Figur 22: Diagramme des Kolbenwegs über dem Kurbelwinkel für alle Kurbeltriebvarianten in Nullstellung und für zwei symmetrisch entgegengesetzten Verstellwinkellagen,
- Figur 23: schematische aber maßstäbliche Darstellungen der Kurbeltriebvariante HR_PSR_intern_2U in unterschiedlichen Kurbelstellungen,
- Figur 24: Diagramme der Volumenverhältnisse und der Hublängen über den Verstellwinkel für alle Kurbeltriebvarianten und
- Figur 25: Diagramme der Neigungswinkel des Pleuels über dem Kurbelwinkel in Nullstellung und für zwei symmetrisch entgegengesetzten Verstellwinkellagen für alle Kurbeltriebvarianten, wobei zum Vergleich der Neigungswinkel des Pleuels eines normalen (d.h. symmetrischen) Kurbeltriebs mit dem Kurbelradius-Pleuellängen-Verhältnis L = 1/3 im Diagramm ebenfalls eingetragen ist.

### Beschreibung

Die vorliegende Erfindung betrifft eine Brennkraftmaschine, die nach dem Viertakt-Atkinson-Zyklus mit einem variablen asymmetrischen Kurbeltrieb arbeitet, und ein Verfahren zu ihrer Laststeuerung.

Die in den Patentansprüchen 1 bis 7 ausgeführten Merkmalskombinationen werden durch die nachfolgend aufgeführten und beschrieben Ausführungsbeispiele erläutert.

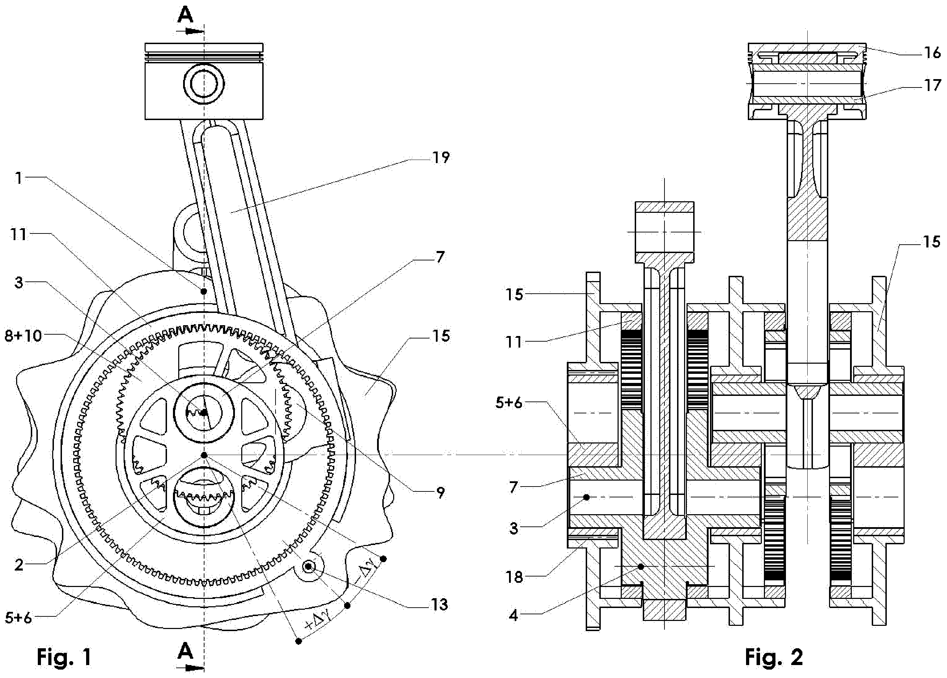

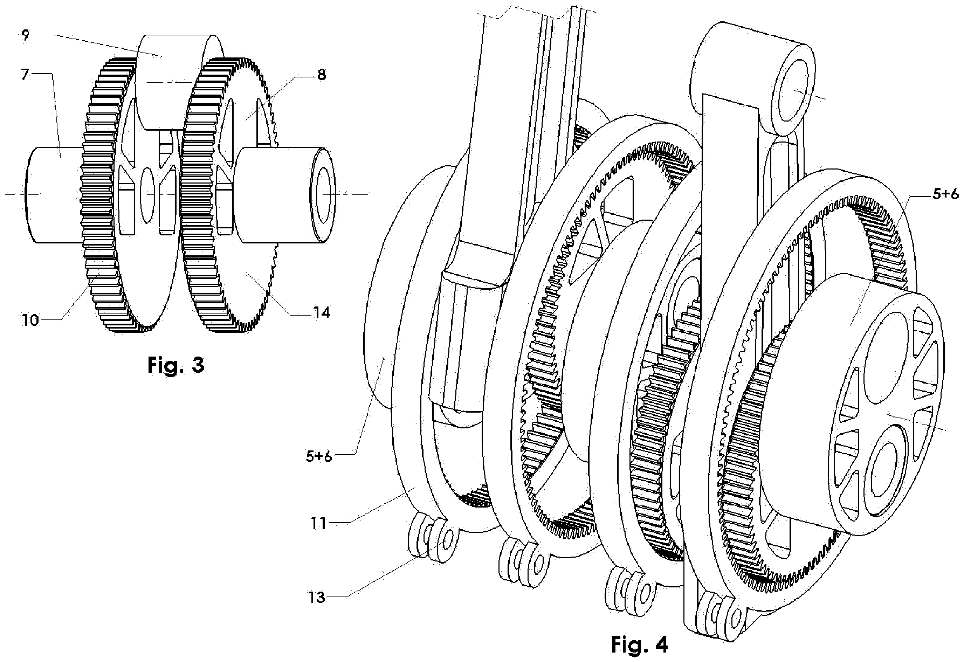

**Ausführungsbeispiel** - Kurbeltriebvariante HR_PSR_intern_2U gemäß Anspruch 2 - ist in Fig. 1 bis 4 für einen Zwei-Zylinder-Kurbeltrieb dargestellt und ist charakterisiert durch:
- die Zusammenführung von Wellenzapfen (5) und Kurbelwangen (6) zu einem Bauteil (5+6) gemäß Merkmal 1.11.2,
- den Einsatz von zwei Hohlzahnrädern (HR) für jede Kurbelwellenkröpfung, um die zylinderspezifische Steuerung des Verdichtungsverhältnisses gemäß Merkmal 1.22 zu ermöglichen,
- den Einsatz von zwei Planeten-Stirnzahnrädern (PSR) gemäß Merkmal 1.16.1, wobei
   ∘ die Planetenräder (10) mit den Exzenterwangen (8) die zusammengefügten Bauteile (8+10) gemäß Merkmal 1.17.2 bilden (s. Fig. 1), die durch geeignete Aussparungen in den PSR zusätzlich auch die Aufgabe der Gegengewichte (14) für die Exzenterkröpfung übernehmen (s. Fig. 3 mit den getrennten Bezeichnungen (8) bzw. (10) und den aussparungsfreien Bereichen (14) der PSR), und
   ∘ zwischen den Kurbelwangen (6) einer Kurbelwellenkröpfung (d.h. intern) gemäß Merkmal 1.18.1 angeordnet sind (s. Fig. 2 und 4),
- die 2:3 Übersetzung zwischen Planetenräder (10) und Hohlräder (11) gemäß Merkmal 1.20.1.1, wobei zur Generierung der vier Kolbenhübe eines Viertakt-Arbeitsspiels zwei Umdrehungen der Kurbelwelle (2U) gemäß Merkmal 1.20.1 benötigt werden, und
- die Ausrichtung der Exzenterkröpfung zur Kurbelwellenkröpfung gemäß Merkmal 1.20.1.3 (s. Fig.1 und den Kurbeltrieb des rechten Zylinders in Fig. 2).

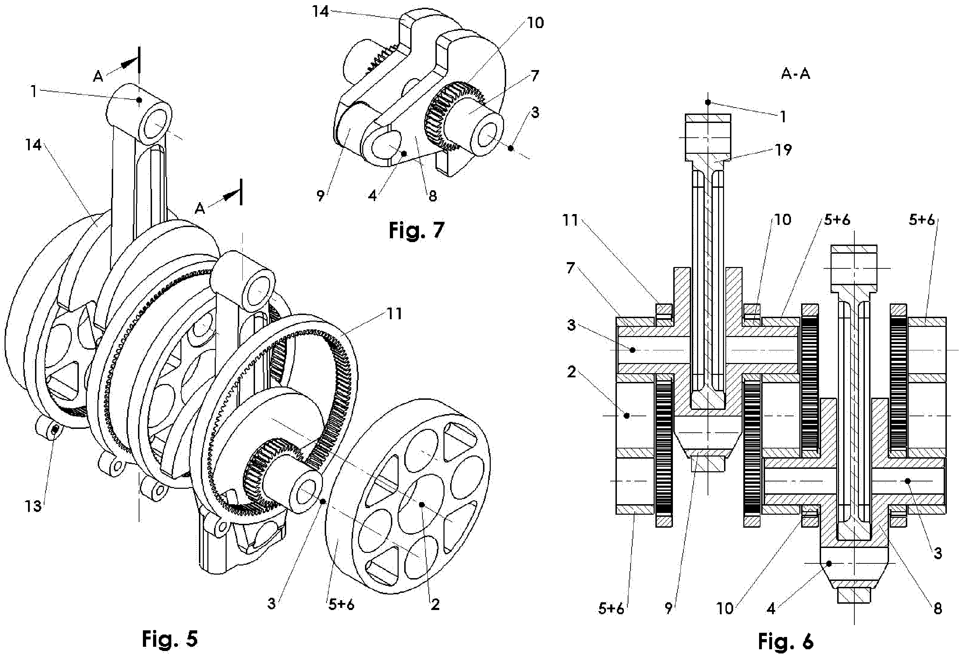

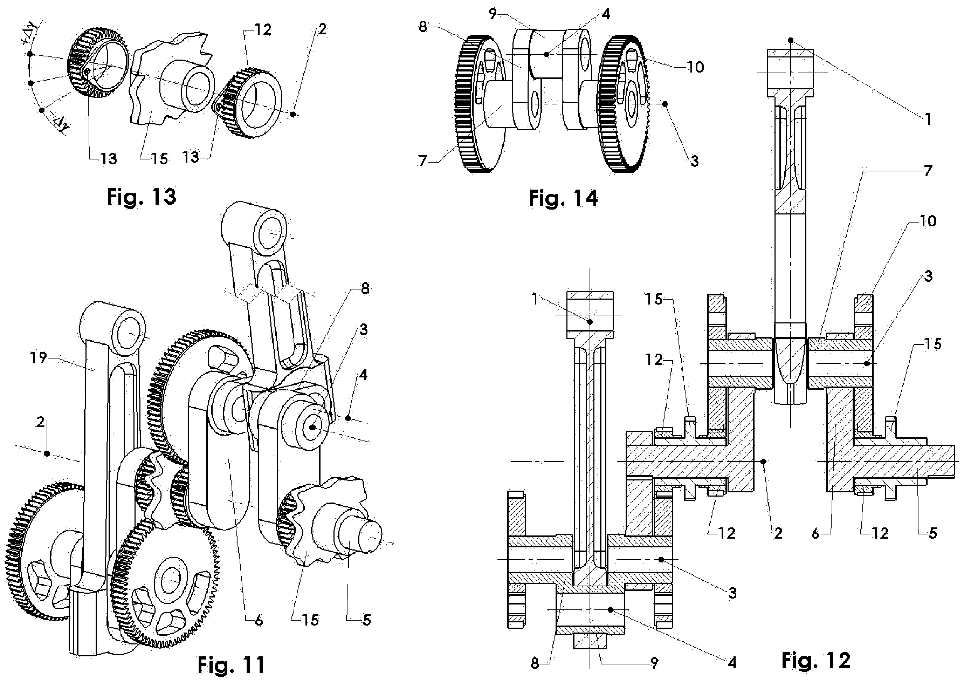

In Fig. 1 ist der vordere Teil des Kurbelgehäuses (15) ausgeblendet, um die Lage des dahinterliegenden Kurbeltriebs sichtbar zu machen. Die Ausrichtung der Exzenterkröpfung zur Kurbelwellenkröpfung gemäß Merkmal 1.20.1.3 stellt sicher, dass sowohl die Kurbelwellenkröpfung als auch die Exzenterkröpfung in Gegenrichtung zum Zylinderkopf (d.h. beide nach unten, s. Kurbeltrieb des linken Zylinders in Fig. 2) gerichtet sind, wenn der Kolben (16) dieses Zylinders sich in seine Expansions-UT-Lage (EUT) befindet. Die Zusammenführung von Wellenzapfen (5) und Kurbelwangen (6) zu einem Bauteil (5+6) ist optional, d.h. auch die getrennte Gestaltung dieser Bauteile, wie z.B. in Fig. 11, 12 und 15 bis 19 ausgeführt, ist ebenfalls möglich. Die Zusammenführung von Planetenräder (10) und Exzenterwangen (8) zu einem Bauteil (8+10), das über gezielte Materialaussparungen auch die Aufgabe der Gegengewichte (14) übernimmt (s. Fig. 3), ist ebenfalls optional. Aber auch eine getrennte Gestaltung dieser Bauteile, wie z.B. in Fig. 7, 8, 9, 11, 12, 14 bis 17 ausgeführt, ist ebenfalls möglich. Über einen beliebigen Verstellmechanismus, der an den Anlenkaugen (13) wirkt, können die Hohlräder (11) in einem sinnvollen Winkelbereich um die Nullstellungsposition verdreht werden (s. Fig. 4 und ±Dg in Fig. 1), um damit das Verdichtungsverhältnis und die Hublängen zylinderspezifisch zu verändern bzw. zu steuern.

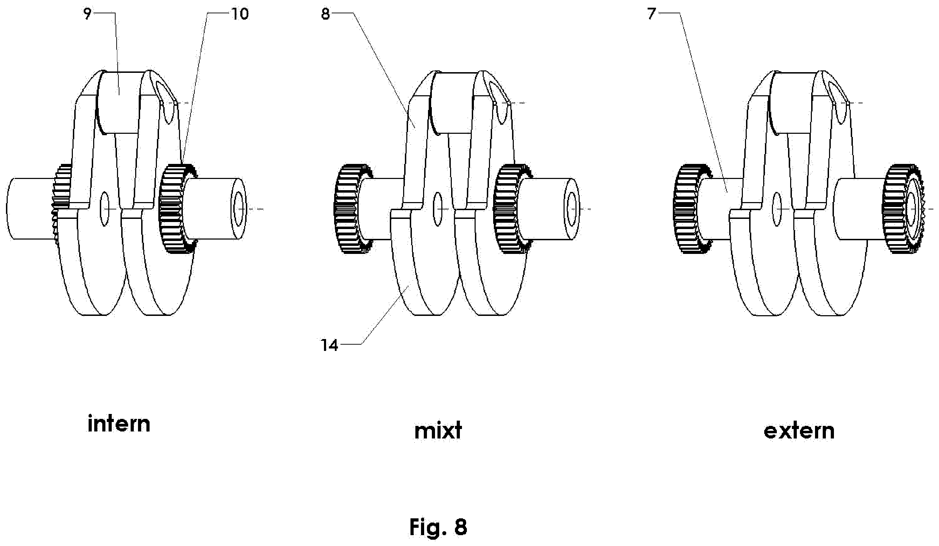

**Ausführungsbeispiel** - Kurbeltriebvariante HR_PSR_intern_1U gemäß Anspruch 3 - ist in Fig. 5 bis 7 für einen Zwei-Zylinder-Kurbeltrieb dargestellt und ist charakterisiert durch:
- die Zusammenführung von Wellenzapfen (5) und Kurbelwangen (6) zu einem Bauteil (5+6) gemäß Merkmal 1.11.2,
- den Einsatz von zwei Hohlzahnrädern (HR) für jede Kurbelwellenkröpfung, um die zylinderspezifische Steuerung des Verdichtungsverhältnisses gemäß Merkmal 1.22 zu ermöglichen,
- den Einsatz von zwei Planeten-Stirnzahnrädern (PSR) gemäß Merkmal 1.16.1, wobei
   ∘ die Planetenräder (10) getrennt von der Exzenterwangen (8) zur Bildung der Exzenterkröpfung ausgeführt sind (s. Fig. 7 und 8) und
   ∘ zwischen den Kurbelwangen (6) einer Kurbelwellenkröpfung (d.h. "intern") gemäß Merkmal 1.18.1 angeordnet sind (s. Fig. 6 und 8),
- die 1:3 Übersetzung zwischen Planetenräder (10) und Hohlräder (11) gemäß Merkmal 1.20.2.1, wobei zur Generierung der vier Kolbenhübe eines Viertakt-Arbeitsspiels eine einzelne Umdrehung der Kurbelwelle (1U) gemäß Merkmal 1.20.2 benötigt wird, und
- die Ausrichtung der Exzenterkröpfung zur Kurbelwellenkröpfung gemäß Merkmal 1.20.2.3 (s. Kurbeltrieb des linken Zylinders in Fig. 6).

Das Kurbelgehäuse (15) in Fig. 1 und 2 gilt auch für den Kurbeltrieb in Fig. 5 und 6 aber, um die Lage der dahinterliegenden Bauteile sichtbar zu machen, wurde es hier ausgeblendet. Die Ausrichtung der Exzenterkröpfung zur Kurbelwellenkröpfung gemäß Merkmal 1.20.2.3 stellt sicher, dass sowohl die Kurbelwellenkröpfung als auch die Exzenterkröpfung in entgegengesetzter Richtung zum Zylinderkopf (d.h. beide nach unten, s. Kurbeltrieb des rechten Zylinders in Fig. 6) gerichtet sind, wenn sich der Kolben dieses Zylinders in seiner Expansions-UT-Lage befindet. Über einen beliebigen Verstellmechanismus, der an den Anlenkaugen (13) wirkt, können die Hohlräder (11) in einem sinnvollen Winkelbereich um die Nullstellungsposition verdreht werden (s. Fig. 5, 9 und 10), um damit das Verdichtungsverhältnis und die Hublängen zylinderspezifisch zu verändern bzw. zu steuern.

Weitere Kurbeltriebvarianten mit zylinderspezifischer Steuerung des Verdichtungsverhältnisses gemäß Merkmal 1.22 können mit Planetenrädern auch in den Anordnungen "mixt", "extern" (s. Fig. 8) oder in jeder anderen gemischten Kombination von allen drei aufgebaut werden, wobei die Anzahl und Lage der Wellenzapfen (5) bzw. Kurbelwangen (6) entsprechend angepasst werden soll.
Beispielsweise für die Anordnung "intern" (s. Fig. 8/intern) der Planetenräder von Fig. 5 und 6 ist folgende Reihenfolge der Bauteile zwischen den Exzenterwangen (8) der benachbarten Zylinder zu erkennen:
linkes Planetenrad (10) - mittig platzierter Wellenzapfen/Kurbelwange-Bauteil (5+6) - rechtes Planetenrad (10).

Für die Anordnung "extern" der Planetenräder (s. Fig. 8/extern) sollen die Reihenfolge und die Anzahl der Bauteile zwischen den Exzenterwangen (8) der benachbarten Zylinder von Fig. 5 und 6 wie folgt angepasst werden:
linkes Wellenzapfen/Kurbelwange-Bauteil (5+6) - linkes Planetenrad (10) - rechtes Planetenrad (10) - rechtes Wellenzapfen/Kurbelwange-Bauteil (5+6).

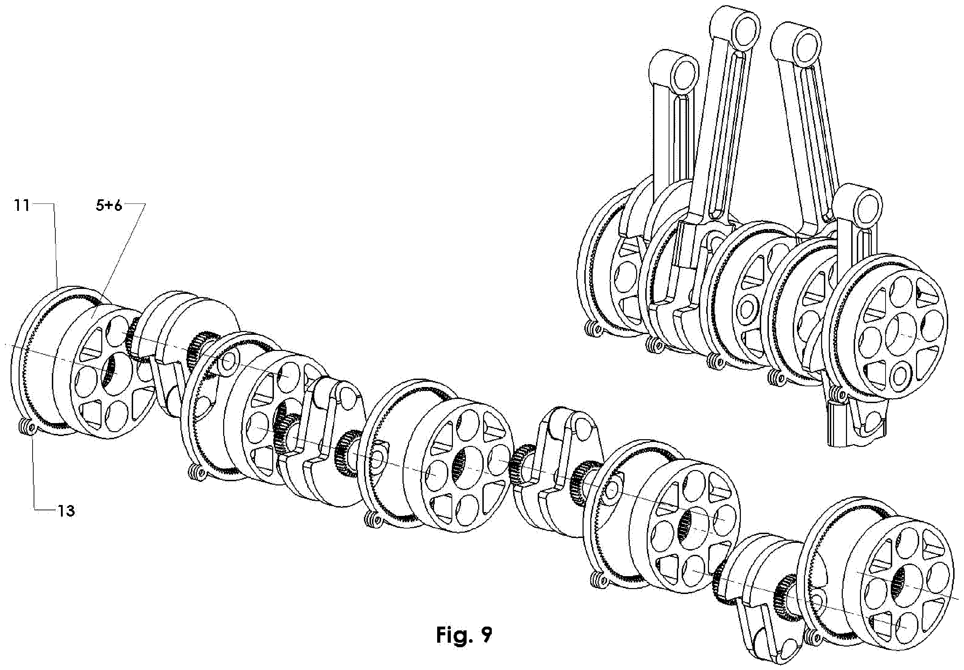

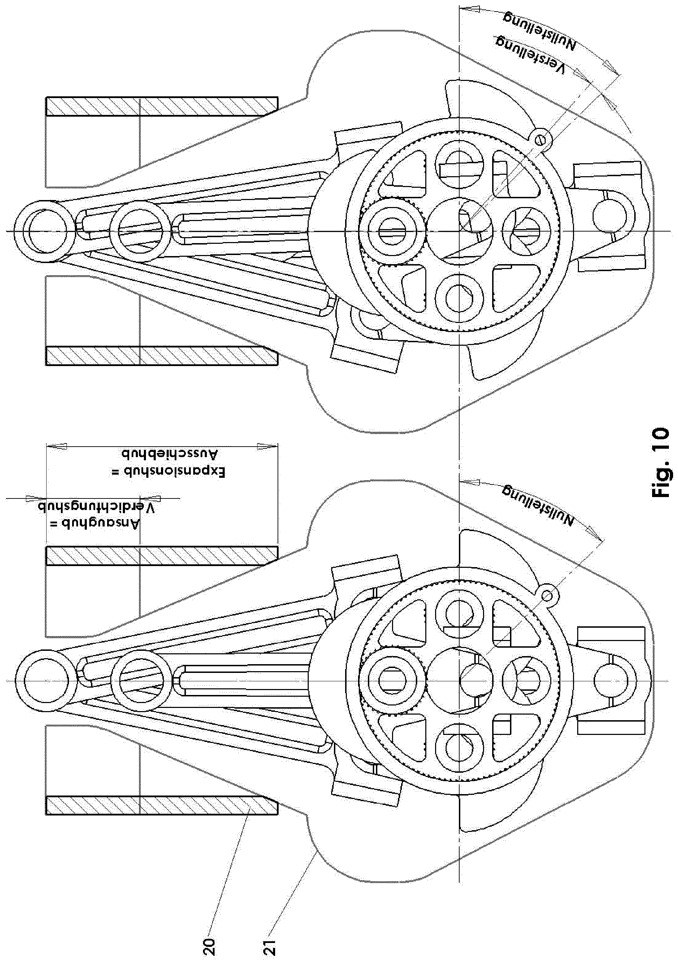

**Ausführungsbeispiel** - Kurbeltriebvariante HR_PSR_mixt_1U gemäß Anspruch 4 - ist in Fig. 9 und 10 für einen VierZylinder-Kurbeltrieb dargestellt und unterscheidet sich insbesondere von der Kurbeltriebvariante HR_PSR_intern_1U durch:
- den Einsatz von nur einem einzelnen Hohlzahnrad (HR) für jede Kurbelwellenkröpfung zuzüglich noch eines weiteren Hohlrades (11) für den gesamten Kurbeltrieb zur zylindereinheitlichen Steuerung des Verdichtungsverhältnisses gemäß Merkmal 4.2,
- den Einsatz von zwei Planeten-Stirnzahnrädern (PSR) gemäß Merkmal 1.16.1, wobei
   ∘ eines der Planetenräder (10) innerhalb und das andere außerhalb der Kurbelwangen (6) einer Kurbelwellenkröpfung gemäß Merkmal 1.18.3 (d.h. "mixt", s. Fig. 8/mixt und 9),
   ∘ oder die Planetenräder (10) paarweise alternierend nach den Merkmalen 1.18.1 (d.h. "intern", s. Fig. 7 und 8/intern) und 1.18.2 (d.h. "extern", s. Fig. 8/extern) für benachbarte Zylinder,
   ∘ oder die Planetenräder (10) auch in jeder anderen gemischten Kombination (z.B. für eine Kurbelwellenkröpfung "intern" und für die anderen "mixt" o.ä.) gemäß den Merkmalen 1.18.1, 1.18.2 und 1.18.3, die eine Minderung der notwendigen Anzahl der Hohlrädern (11) ermöglicht,
   angeordnet sind.

Beispielsweise für die Anordnung "extern" (s. Fig. 4/extern) aller Planetenräder (10) und die zylindereinheitliche Steuerung des Verdichtungsverhältnisses gemäß Merkmal 1.19.1 soll die Reihenfolge und die Anzahl der Bauteile zwischen den Exzenterwangen (8) der benachbarten Zylinder aus Fig. 2 wie folgt angepasst werden:
linkes Wellenzapfen/Kurbelwange-Bauteil (5+6) - mittig platziertes Planetenrad (10) - rechtes Wellenzapfen/Kurbelwange-Bauteil (5+6).

Das Kurbelgehäuse (15) aus Fig. 1 und 2 gilt auch für den Kurbeltrieb in Fig. 9 und 10, wobei das Kurbelgehäuse hier ausgeblendet ist und der Kurbeltrieb zusammengesetzt (oben) bzw. in einer Explosionsansicht (unten) dargestellt ist. In Fig. 10 ist der Kurbeltrieb in Nullstellung (links) und in einer verstellten Lage (rechts) dargestellt. Zusätzlich sind in beiden Bildern der Fig. 10 die Lage der Zylinder (20) für ein Expansionshub-Bohrung-Verhältnis gleich eins, die paarweise gleichlangen Kolbenhübe und die Pleuelgeige (21) (d.h. die Außenkontur des Pleuels während eines Arbeitsspiels) in Nullstellung des Kurbeltriebs, gemäß Merkmal 1.19.2, dargestellt.

**Ausführungsbeispiel** - Kurbeltriebvariante SR_PSR_extern_2U gemäß Anspruch 5 - ist in Fig. 11 bis 14 für einen Zwei-Zylinder-Kurbeltrieb dargestellt und ist charakterisiert durch:
- den Einsatz von zwei Sonnenrädern (SR) für jede Kurbelwellenkröpfung (s. Fig. 12), um die zylinderspezifische Steuerung des Verdichtungsverhältnisses gemäß Merkmal 1.22 zu ermöglichen,
- den Einsatz von zwei Planeten-Stirnzahnrädern (PSR), gemäß Merkmal 1.16.1, wobei beide Planetenräder (10) außerhalb der Kurbelwangen (6) einer Kurbelwellenkröpfung, gemäß Merkmal 1.18.2 (d.h. extern, s. Fig. 11, 12 und 14), angeordnet sind,
- die 2:1 Übersetzung zwischen Planetenräder (10) und Sonnenräder (12), gemäß Merkmal 1.20.1.2, wobei zur Generierung der vier Kolbenhübe eines Viertakt-Arbeitsspiels zwei Umdrehungen der Kurbelwelle (2U), gemäß Merkmal 1.20.1, benötigt werden,
- die Ausrichtung der Exzenterkröpfung zur Kurbelwellenkröpfung gemäß Merkmal 1.20.1.3, (s. den Kurbeltrieb des rechten Zylinders in Fig. 11 und 12, wobei in Fig. 11 das vordere Planetenrad zur besseren Sicht der Lage der Kurbelzapfenachse (3) und der Exzenterzapfenachse (4) ausgeblendet wurde).

Die kleinen Abschnitte des Kurbelgehäuses (15), s. Fig. 11 bis 13, führen im Inneren die Lager der Wellenzapfen (5) und im Äußeren die festgehaltenen Sonnenräder (12). Über einen beliebigen Verstellmechanismus, der an den Anlenkaugen (13) wirkt, können die Sonnenräder (12) in einem sinnvollen Winkelbereich um die Nullstellungsposition verdreht werden (s. ±Dg in Fig. 13), um damit das Verdichtungsverhältnis und die Hublängen zylinderspezifisch zu verändern bzw. zu steuern.

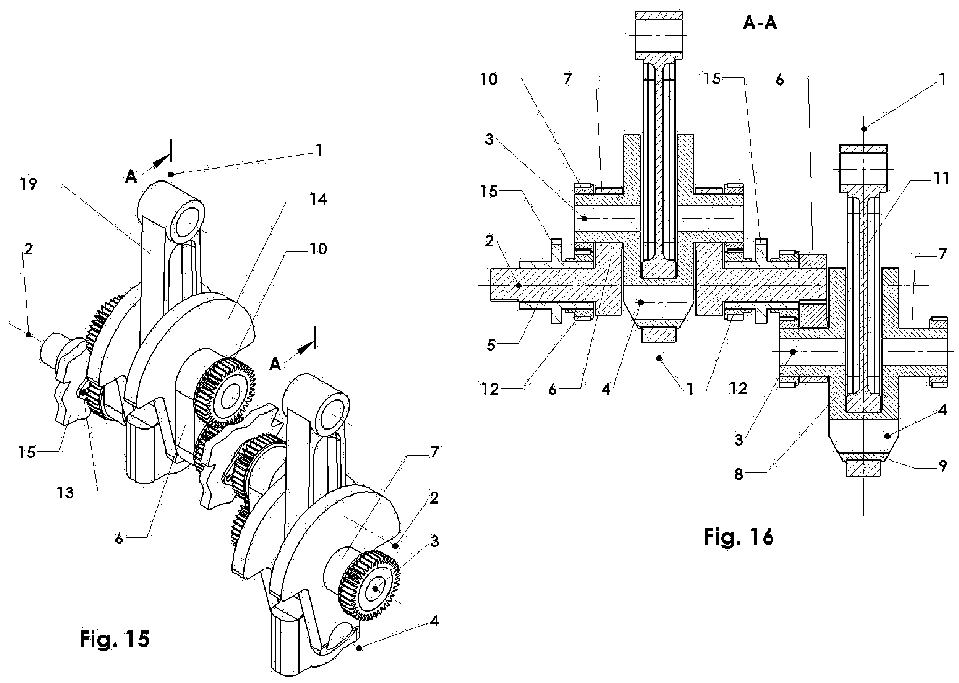

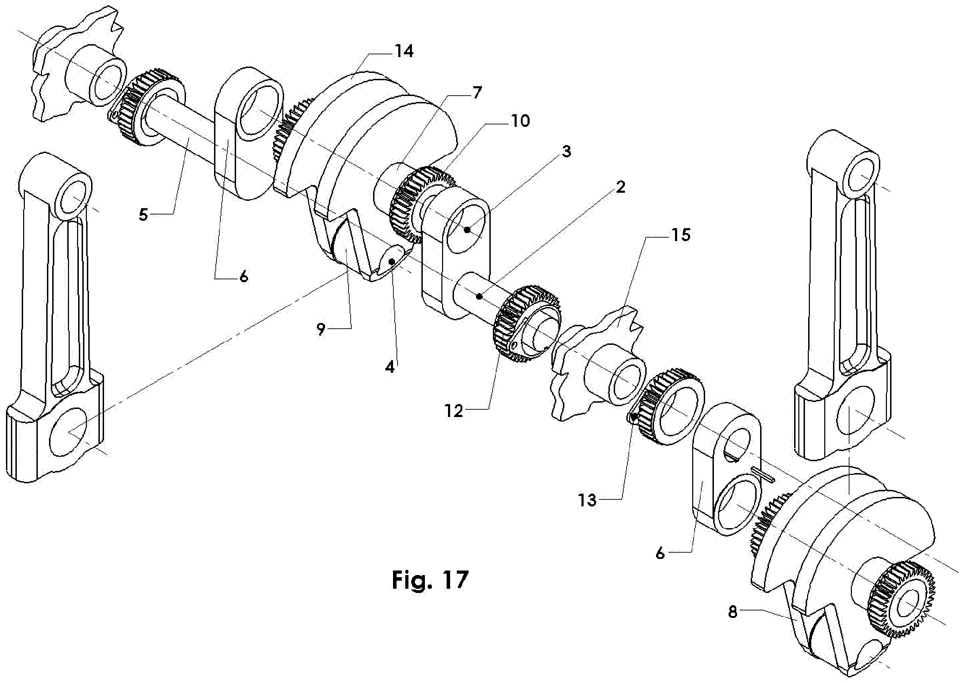

**Ausführungsbeispiel** - Kurbeltriebvariante SR_PSR_extern_1U gemäß Anspruch 6 - ist in Fig. 15 bis 17 für einen Zwei-Zylinder-Kurbeltrieb dargestellt und unterscheidet sich insbesondere von der Kurbeltriebvariante SR_PSR_extern_2U durch:
- die 1:1 Übersetzung zwischen Planetenräder (10) und Sonnenräder (12) gemäß Merkmal 1.20.2.2, wobei zur Generierung der vier Kolbenhübe eines Viertakt-Arbeitsspiels nur eine einzelne Umdrehung der Kurbelwelle (1U) gemäß Merkmal 1.20.2 benötigt wird,
- die Ausrichtung der Exzenterkröpfung zur Kurbelwellenkröpfung, gemäß Merkmal 1.20.2.3, (s. den Kurbeltrieb des linken Zylinders in Fig. 15 bis 17).
Die Exzenterkröpfung ist identisch mit der in Fig. 8/extern aufgebauten. In Fig. 17 ist der Zwei-Zylinder-Kurbeltrieb in einer Explosionsansicht dargestellt.

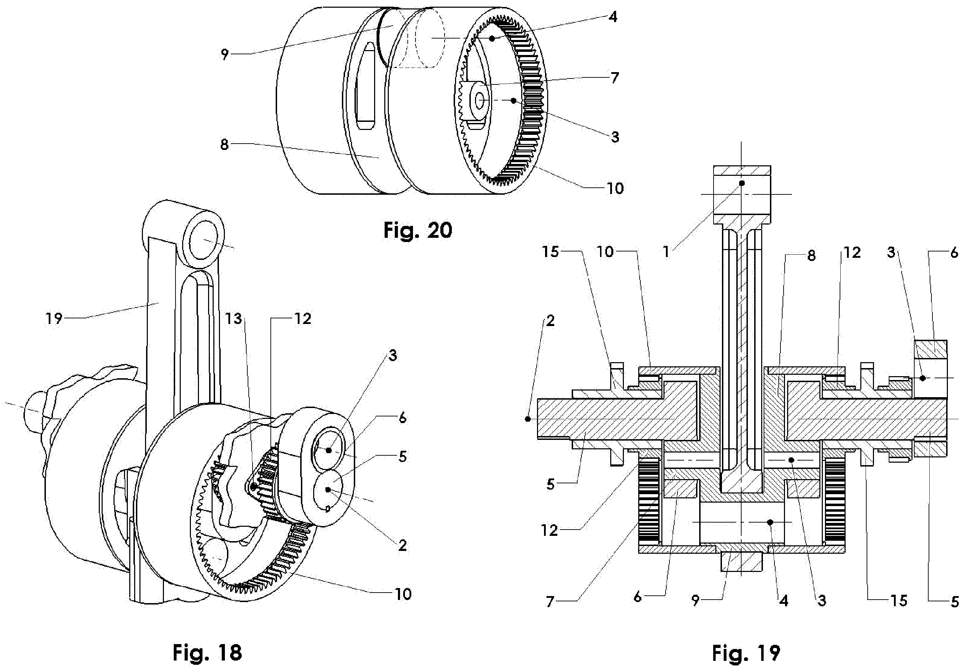

**Ausführungsbeispiel** - Kurbeltriebvariante SR_PHR_extern_2U gemäß Anspruch 7 - ist in Fig. 18 bis 20 zum besseren Verständnis nur für einen Zylinder des Kurbeltriebs dargestellt und unterscheidet sich insbesondere von der Kurbeltriebvariante SR_PSR_extern_2U durch:
- den Einsatz von Planeten-Hohlzahnrädern (PHR), gemäß Merkmal 1.16.2, wobei sich die Verzahnungen beider Planetenräder (10) außerhalb der Kurbelwangen (6) einer Kurbelwellenkröpfung gemäß Merkmal 1.18.2 (d.h. extern, s. Fig. 18 und 19) befinden,
- die entsprechende Gestaltung der Kurbelwangen (6), sodass diese im Inneren der topfförmigen Planeten-Hohlräder (10) angeordnet sind,
- die 2:1 Übersetzung zwischen Planetenräder (10) und Sonnenräder (12) gemäß Merkmal 1.20.1.2, wobei zur Generierung der vier Kolbenhübe eines Viertakt-Arbeitsspiels zwei Umdrehungen der Kurbelwelle (2U) gemäß Merkmal 1.20.1 benötigt werden,
- die Ausrichtung der Exzenterkröpfung zur Kurbelwellenkröpfung gemäß Merkmal 1.20.1.3.
In Fig. 18 und 19 ist der Kurbeltrieb in der EUT-Lage (wie der linke Zylinder in Fig. 2 und der rechte Zylinder in Fig. 4) dargestellt.

### Vorteile der Erfindung

### Laststeuerung der Brennkraftmaschine

Die Laststeuerung der Brennkraftmaschine gemäß Anspruch 8 wird beispielhaft nur für die Kurbeltriebvariante HR_PSR_*_1U (* steht hier für "intern", "extern" und "mixt" Anordnung der Planetenräder, s. Fig. 8) näher erläutert.

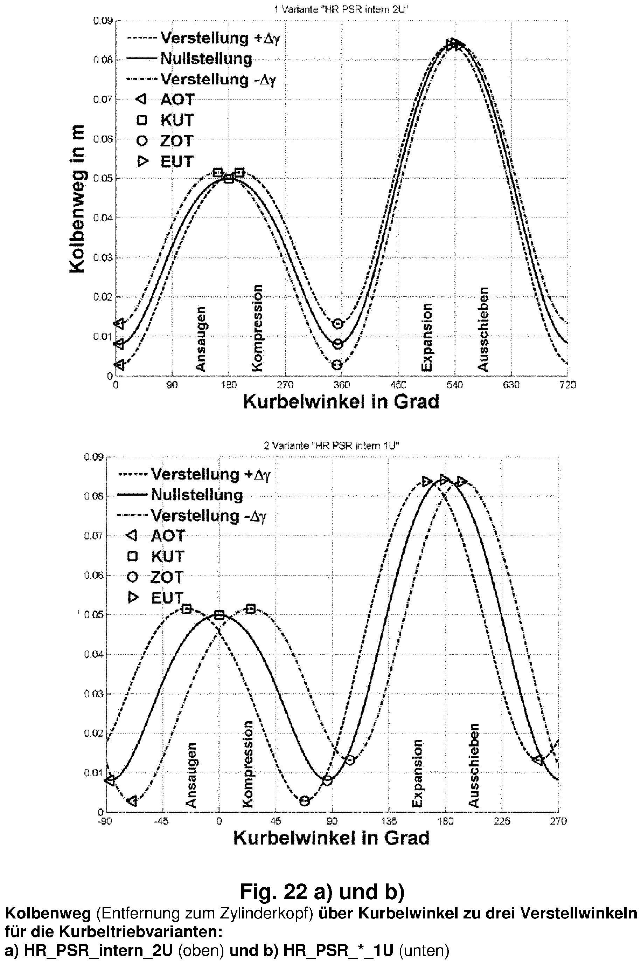

Der Einfluss der Verstellung der Hohlräder (11) auf den Kolbenweg und auf die veränderlichen Lage aller vier Totpunkte ist in Fig. 22b dargestellt. Eine Verstellung der Hohlräder in Bereich der positiven Verstellwinkel (+Dg) erhöht das Verdichtungsverhältnis (weil die Entfernung des Kolbens zum Zylinderkopf im ZOT abnimmt) und verschlechtert die Entleerung des Zylinders von Restabgasen (der Restgasanteil zunimmt, weil die Entfernung des Kolbens zum Zylinderkopf und damit das Volumen der Restabgase im AOT zunehmen, s. Fig. 22b).

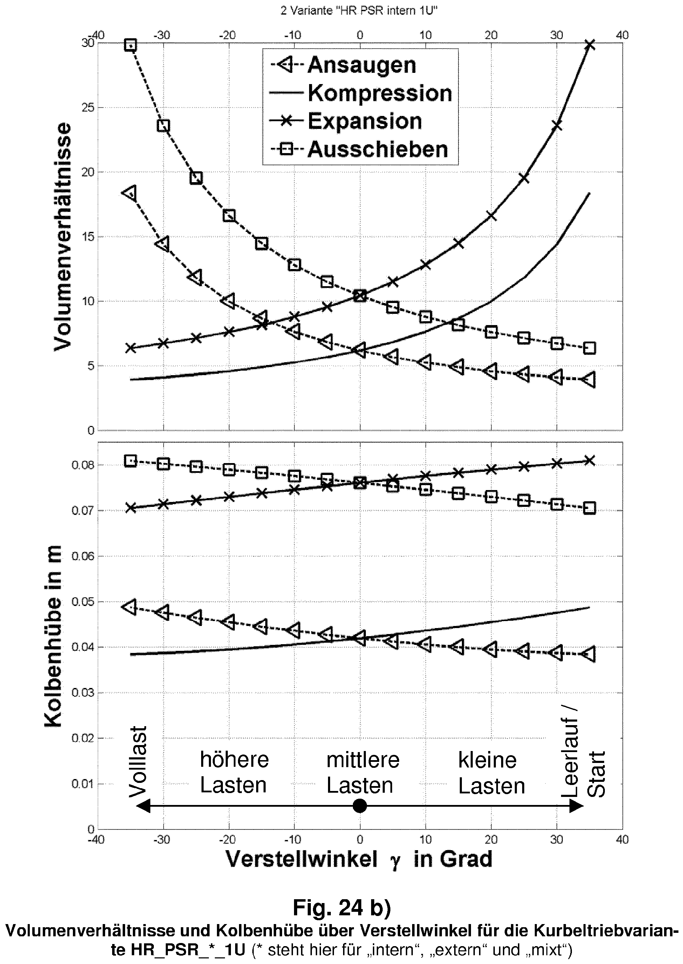

In Fig. 24b sind die Volumenverhältnisse (oben) und die Kolbenhübe (unten) über dem Verstellwinkel dargestellt. Im Fall einer Verstellung der Hohlräder (11) in Bereich der positiven Verstellwinkel (d.h. rechts von Nullstellung g = 0, s. Fig. 24b) erkennt man, dass mit dem Entfernen von Nullstellung gleichzeitig
a) das Verdichtungsverhältnis zunimmt (damit der Wirkungsgrad des Kreisprozesses ebenfalls zunimmt),
b) der Ansaughub sich verkürzt (damit weniger frische Ladungsmasse gesaugt wird),
c) das Ausschiebeverhältnis abnimmt (damit der Restabgasanteil im Zylinder zunimmt) und
d) das Expansionsverhältnis zunimmt (damit der Zylinderdruck beim Öffnen der Auslassventile abnimmt, die Turbine einer turboaufgeladenen Brennkraftmaschine weniger Leistung für den Antrieb des Kompressors produzieren kann und dementsprechend der Ladedruck abnimmt).

Die Folgen b), c) und d) der nach rechts Verstellung des Kurbeltriebs (s. Fig. 24b) führen gemeinsam zur Abnahme der frischangesaugten Ladungsasse und damit der Last der Brennkraftmaschine. Die gleichzeitige Zunahme des Verdichtungsverhältnisses wird demzufolge nicht zur Überschreitung der üblichen oberen Grenzen für Zylinderdruck und Zylindertemperatur bezogen auf dem Kreisprozess führen. Damit kann die Laststeuerung der Brennkraftmaschine durch diese Verstellung des Kurbeltriebs gemäß Anspruch 8, Merkmal 8.1, von den mittleren zu den kleinen Lasten (bis Leerlauf oder Start, d.h. bis Nulllast, s. Fig. 24b) und umgekehrt weitgehend ohne notwendige Drosselung und/oder Abmagerung des Gemisches erfolgen.

Eine Verstellung der Hohlräder in Bereich der negativen Verstellwinkel (d.h. links von Nullstellung, s. Fig. 24b) ist dagegen für die Laststeuerung von den mittleren zu den höheren und Voll-Lasten und umgekehrt gemäß Anspruch 8, Merkmal 8.2, geeignet und kann weitgehend ohne Entdrosselung und/oder Anfetten des Gemisches erfolgen.

### Vorteile der Erfindung

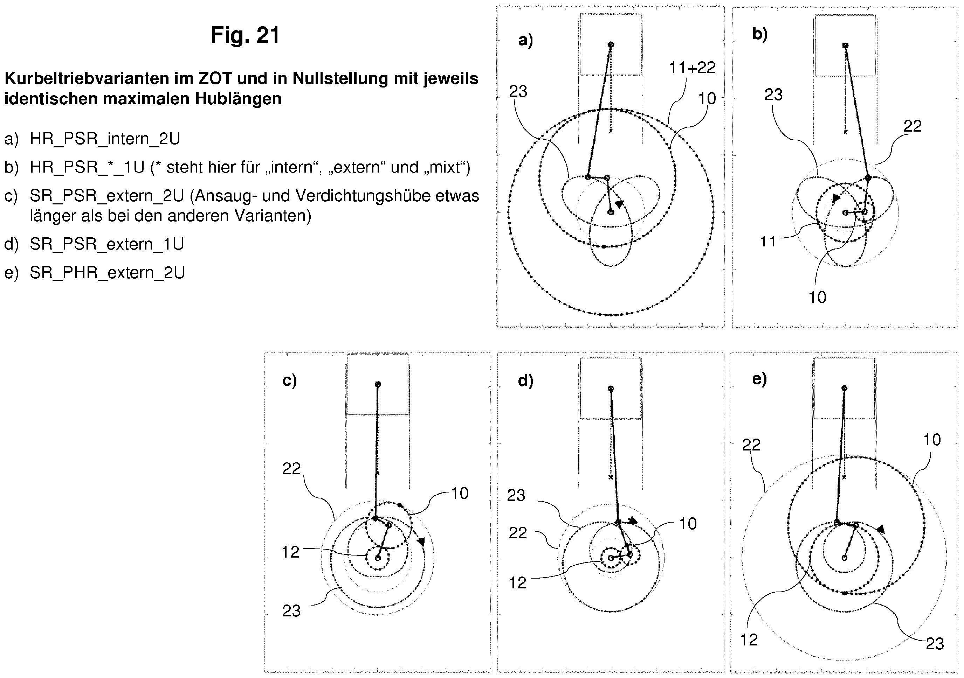

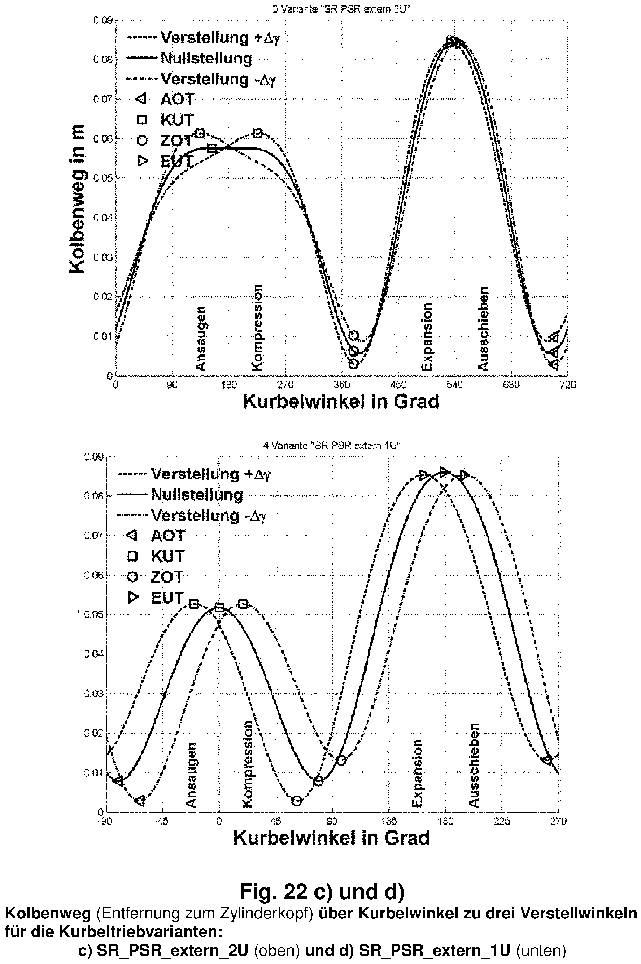

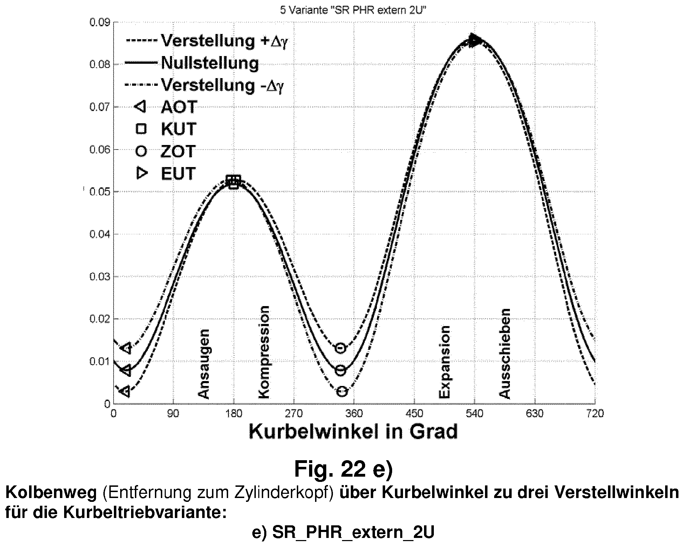

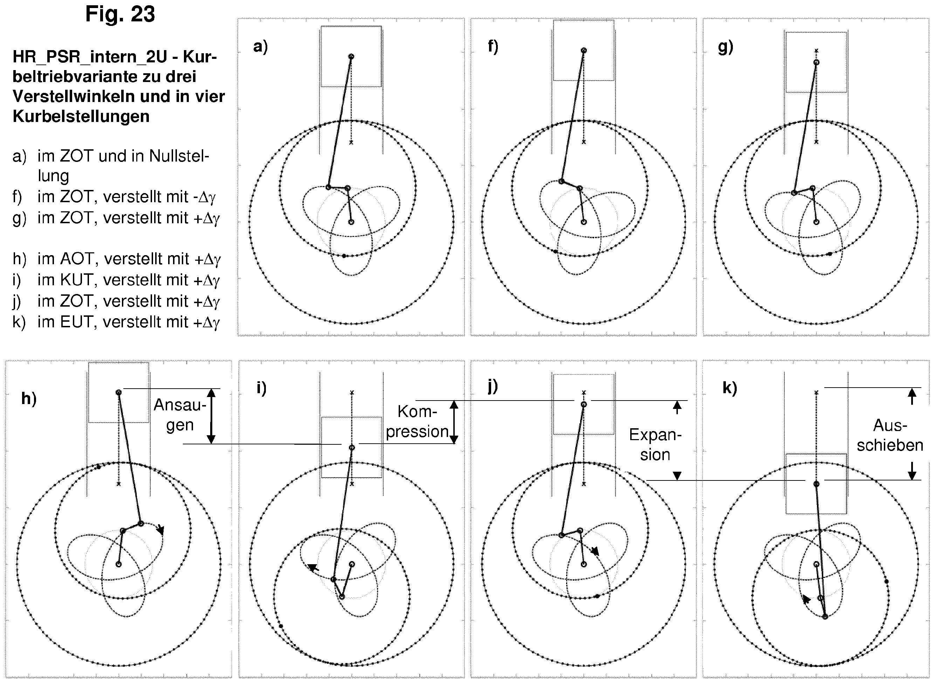

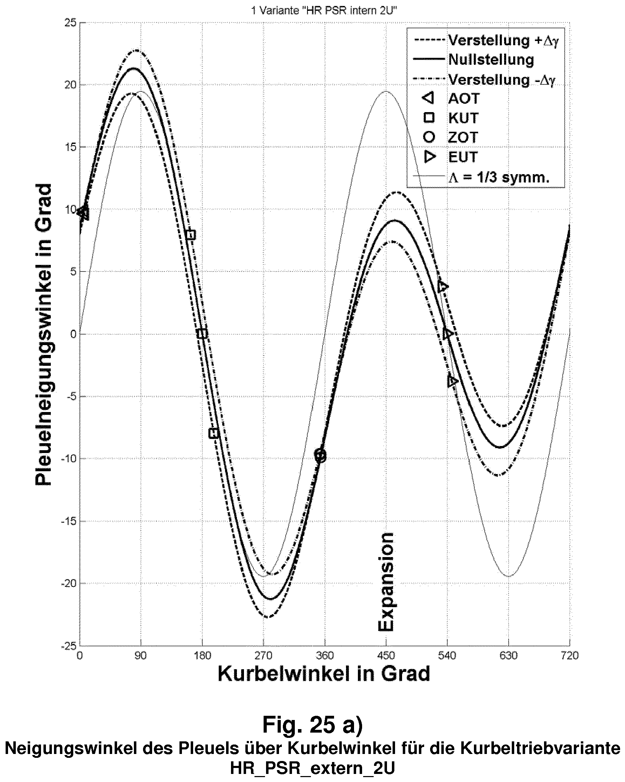

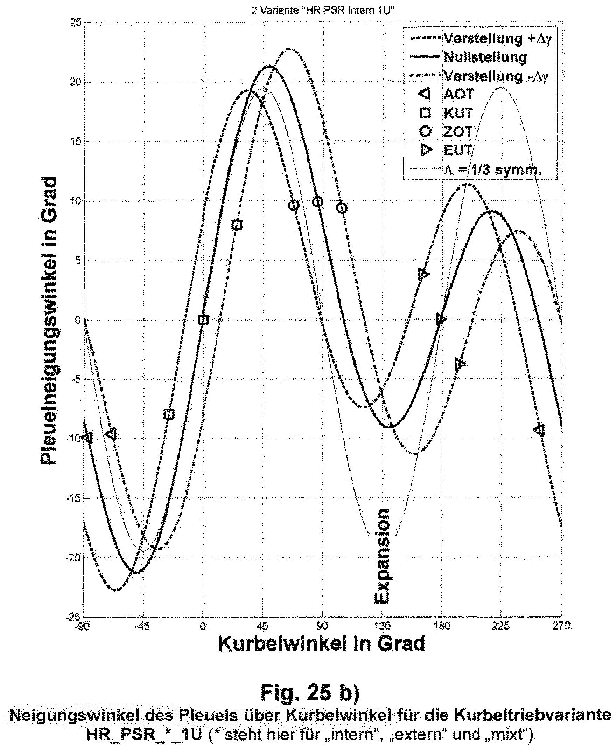

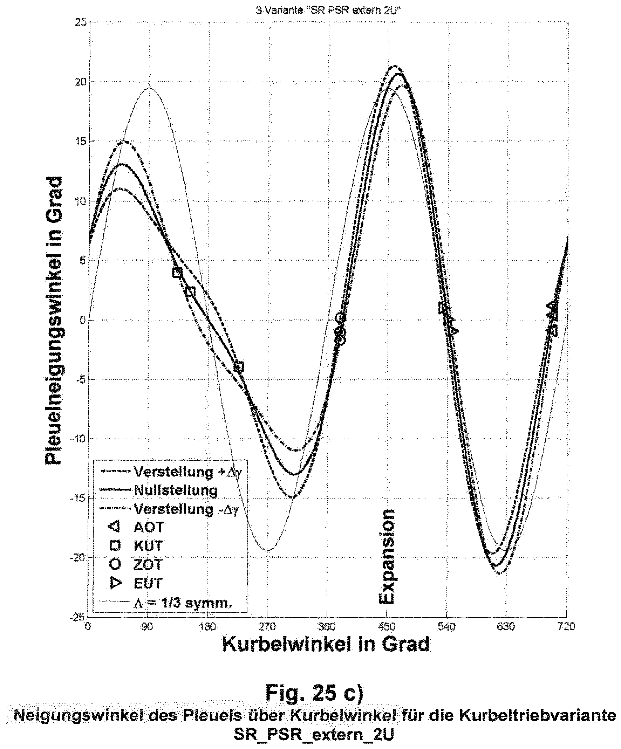

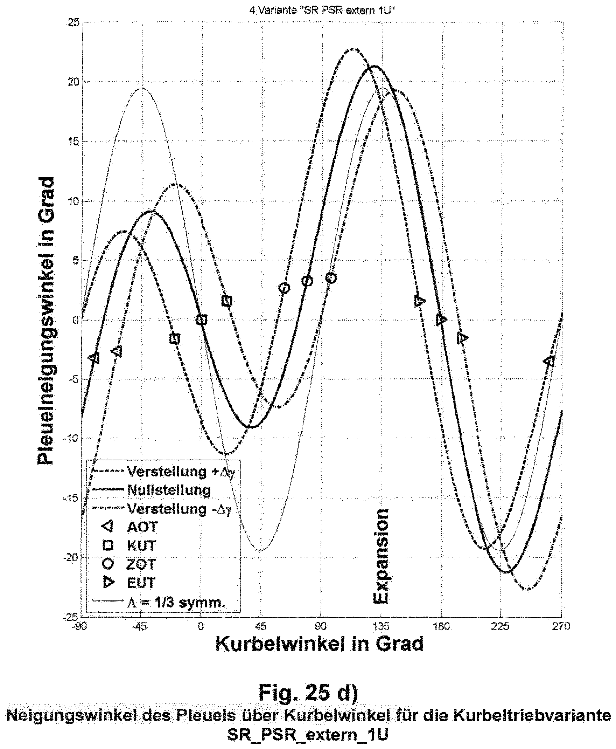

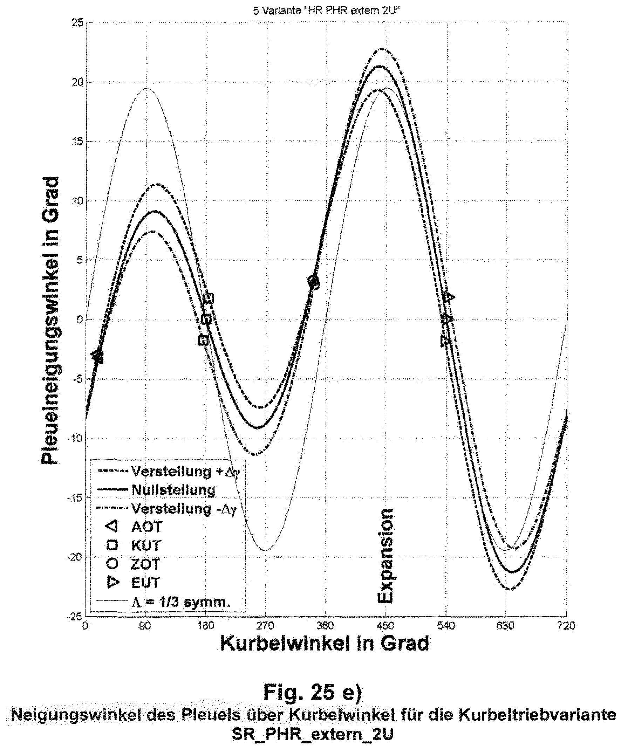

Die vorliegende Erfindung bietet insbesondere folgende Vorteile gegenüber den bisher bekannten Lösungsansätzen:
1) beliebiger Auswahl der Exzentrizität und somit der Asymmetrie der Kolbenhübe mit den derzeitig üblichen Abmessungen des großen Pleuelauges,
2) modulare und kompakte Bauweise des Kurbeltriebs mit relativ einfach realisierbarem Massenausgleich,
3) möglicher Einsatz von Wälzlagern (s. Fig. 2),
4) übliche Gestaltung und Abmessungen des Kurbelgehäuses und damit des Motors,
5) stark geminderter Neigungswinkel des Pleuels während des Expansionshubs in einigen Ausführungsvarianten (s. Varianten a) und b) in Fig. 25). Dadurch vermindert sich die Normalkraft am Kolbenbolzen und demzufolge die Reibung zwischen Koben und Zylinderlauffläche.
6) halbierte Drehzahl der Kurbelwelle bei gleichbleibender Anzahl der Arbeitsspiele pro Zeit in einigen Ausführungsvarianten (s. Varianten b) und d) in Fig. 21 und 22),
7) kontinuierliche Variation des Verdichtungsverhältnisses in einem beliebig großen Bereich (s. Fig. 22, 23 und 24) und
8) einfache, zylinderspezifische oder einheitliche, Steuerung des Verdichtungsverhältnisses und der Kolbenhübe, gemäß Ansprüchen 8 und 9, zur Implementierung von Laststeuerungsstrategien.

Die Vorteile 1), 7) und 8) führen zur Verbesserung des inneren Wirkungsgrades, die Vorteile 1) bis 6) zur Verbesserung des mechanischen Wirkungsgrades und alle gemeinsam zur Verbesserung des effektiven Wirkungsgrades der nach Ansprüchen 1 bis 9 gestalteten und gesteuerten Brennkraftmaschine.

### Abkürzungen:

- ZPK: Zahnrad-Planeten-Kurbelgetriebe
- HR: Hohl-Rad
- SR: Sonnen-Rad
- PSR: Planeten-Stirn-Rad
- PHR: Planeten-Hohl-Rad
- extern: Planetenräder befinden sich seitlich außerhalb beider Kurbelwangen einer Kröpfung
- intern: Planetenräder befinden sich zwischen beider Kurbelwangen einer Kröpfung
- mixt: ein Planetenrad befindet sich innerhalb und das zweite außerhalb der Kurbelwangen einer Kröpfung
- 2U: 2 Umdrehungen der Kurbelwelle für die 4 Takte
- 1U: 1 Umdrehung der Kurbelwelle für die 4 Takte (wie beim Zweitakter)
- OT: oberer Totpunkt
- UT: unterer Totpunkt
- ZOT: Zünd-OT
- AOT: Ansaug-OT (OT zum Beginn des Ansaughubs, Ladungswechsel-OT)
- EUT: Expansions-UT (UT zum Ende des Expansionshubs)
- KUT: Kompressions-UT (UT zum Beginn des Kompressionshubs)

### Bezeichnungen in den Figuren:

- 1.: Zylinder-Achse
- 2.: Wellenzapfen-Achse
- 3.: Kurbelzapfen-Achse
- 4.: Exzenterzapfen-Achse
- 5.: Wellenzapfen
- 6.: Kurbelwange
- 7.: Halbkurbelzapfen
- 8.: Exzenterwange
- 9.: Exzenterzapfen
- 10.: Planetenrad
- 11.: Hohlrad
- 12.: Sonnenrad
- 13.: Anlenkauge
- 14.: Gegengewicht
- 15.: Kurbelgehäuse
- 16.: Kolben
- 17.: Kolbenbolzen
- 18.: Wälzlager (Nadellager)
- 19.: Pleuel
- 20.: Zylinder
- 21.: Pleuelgeige
- 22.: Mindestdurchmesser des Kurbelgehäuses
- 23.: Ortskurve des Exzenterzapfens (somit der Achse des großen Pleuelauges)

## Patentansprüche

1. **Brennkraftmaschine**
**1.1. mit mehreren Zylindern**
1.2. in Reihe-, Boxer-, V-, X- oder Stern-Zylinderanordnungen, wobei ein oder mehrere Pleuel gemeinsam an einem einzelnen Hubzapfen angelenkt sind,
1.3. arbeitend
1.3.1. nach Viertakt-Verfahren,
1.3.2. nach einem realen Atkinson-Zyklus, wobei der Verdichtungshub kürzer als der Expansionshub ist,
**1.4. betreibbar**
1.4.1. freisaugend oder
1.4.2. aufgeladen,
1.4.3. mit Fremd-, Selbstzündung oder gemixter Zündvariante,
1.4.4. mit konstantem oder mit variablem Verdichtungsverhältnis,
1.5. wobei die Kurbelwelle des Kurbeltriebs aus mehreren Bauteilen besteht, d.h. sie ist als sogenannte gebaute Kurbelwelle ausgeführt,
1.6. der Kurbeltriebteil eines Zylinders oder beispielsweise eines Zylinderpaars in V-Zylinderanordnung nach Merkmal 1.2 aus einer Kurbelwellenkröpfung, einer Exzenterkröpfung und einem Planetengetriebe besteht,
1.7. das Planetengetriebe die Drehbewegungen der Kurbelwellenkröpfung um die Kurbelwellenlängsachse (2) und der Exzenterkröpfung um Kurbelzapfenlängsachse (3) synchronisiert und die Drehmomentübertragung zwischen beiden Kröpfungen ermöglicht bzw. erzwingt,
1.8. jeder Kurbelzapfen aus jeweils zwei getrennten Halbkurbelzapfen (7) besteht,
1.9. die Halbkurbelzapfen (7) sowohl zu der Kurbelwellenkröpfung als auch zu der Exzenterkröpfung gehören,
1.10. jede Kurbelwellenkröpfung aus zwei Wellenzapfen (5), Kurbelwangen (6) und Halbkurbelzapfen (7) besteht,
1.11. ein Wellenzapfen (5) und eine Kurbelwange (6)
1.11.1. fest verbunden sind,
1.11.2. oder zu einem Bauteil (5+6) zusammengeführt sind, um einerseits die Länge des Kurbeltriebs zu reduzieren und anderseits den Einsatz von Wälzlagern (18) zu ermöglichen,
1.12. jede Exzenterkröpfung aus einem Exzenterzapfen (9), zwei Exzenterwangen (8) und zwei Halbkurbelzapfen (7) besteht,
1.13. jeder Halbkurbelzapfen (7) entweder in den Exzenterwangen (8) oder in den Kurbelwangen (6) radialgelagert wird, wobei seine Radiallagerung auch in beiden Wangen möglich aber (wegen der Drehsteifigkeitsminderung des Kurbeltriebs) nicht sinnvoll ist,
1.14. die Halbkurbelzapfen (7) die Stege des Planetengetriebes bilden und damit die Planetenräder (10) mitführen,
1.15. die eingesetzten Planetengetriebe **zweckmäßig der Erfüllung des Merkmals 1.7** unvollständig ausgebildet werden können, wobei,
1.15.1. entweder die Sonnenräder **entfallen dürfen** und nur Hohlräder (**HR**) verbleiben,
1.15.2. oder die Hohlräder **entfallen dürfen** und nur Sonnenräder (**SR**) verbleiben,
1.16. die Planetenräder (10)
1.16.1. entweder als Stirnzahnräder (**PSR**)
1.16.2. oder als Hohlzahnräder (**PHR**) ausgeführt **sind,**
1.17. die Planetenräder (10) und die Exzenterwangen (8) für den Antrieb der Exzenterkröpfung
1.17.1. fest verbunden sind,
1.17.2. oder zu einem Bauteil (8+10) zusammengeführt **sind,**
1.18. die zwei Planetenräder (10) einer Exzenterkröpfung in Bezug auf die Lage der Kurbelwangen (6) einer Kurbelwellenkröpfung
1.18.1. beide innerhalb (intern),
1.18.2. beide außerhalb (extern) oder
1.18.3. ein Planetenrad innerhalb und das andere außerhalb (mixt), angeordnet **sind,**
1.19. die Hohlräder (11) nach Merkmal 1.15.1 bzw. die Sonnenräder (12) nach Merkmal 1.15.2 der Planetengetriebe
1.19.1. im Kurbelgehäuse (15) radialgelagert sind,
1.19.2. jedoch über Anlenkaugen (13) in einer **Nullstellung festhaltbar sind,** in der paarweise einerseits Ansaug- und Verdichtungs-Hübe und anderseits Expansions- und Ausschiebe-Hübe gleich lang (d.h. halbsymmetrisch) sind,
1.20. die Übersetzung und die Synchronisation zwischen den Zahnrädern des Planetengetriebes zur Entstehung der notwendigen vier Kolbenhübe des Vier-Takt-Verfahrens derart ausgewählt sind, um
1.20.1. entweder nach zwei Kurbelwellenumdrehungen (**2U**) nur eine Umdrehung der Planetenräder (10) zu erzwingen, damit
1.20.1.1. die Übersetzung zwischen Planetenrädern (10) und Hohlrädern (11) nach Merkmal 1.15.1 entsprechend **2:3** beträgt,
1.20.1.2. die Übersetzung zwischen Planetenrädern (10) und Sonnenrädern (12) nach Merkmal 1.15.2 entsprechend **2:1** beträgt,
1.20.1.3. wobei die Exzenterkröpfung zur Synchronisation senkrecht zur Kurbelwellenkröpfung gerichtet werden muss, wenn die Kurbelwellenkröpfung gegen OT gerichtet ist und die Anlenkaugen (13) sich in der Nullstellung gemäß Merkmal 1.19.2 befinden,
1.20.2. oder nach einer einzelnen Kurbelwellenumdrehung (**1U**) zwei Umdrehungen der Planetenräder (10) zu erzwingen, damit
1.20.2.1. die Übersetzung zwischen Planetenrädern (10) und Hohlrädern (11) nach Merkmal 1.15.1 dementsprechend **1:3** beträgt,
1.20.2.2. die Übersetzung zwischen Planetenrädern (10) und Sonnenrädern (12) nach Merkmal 1.15.2 dementsprechend **1:1** beträgt,
1.20.2.3. wobei die Exzenterkröpfung zur Synchronisation entgegen der Kurbelwellenkröpfung gerichtet werden muss, wenn die Kurbelwellenkröpfung gegen OT gerichtet ist und die Anlenkaugen (13) sich in der Nullstellung gemäß Merkmal 1.19.2 befinden,
**dadurch gekennzeichnet, dass**
1.21. **durch** geringfügige steuerbare Verdrehungen um die Wellenlängsachse (2) der Hohlräder (11) nach Merkmal 1.15.1 bzw. der Sonnenräder (12) nach Merkmal 1.15.2 gegenüber ihre Nullstellungen durch der Krafteinwirkung an den Anlenkaugen (13) sowohl die Änderung des Verdichtungsverhältnisses (und gleichzeitig der Volumenverhältnisse, bezogen auf Ansaugen, Expansion und Ausschieben) als auch aller vier Kolbenhübe (d.h. vollasymmetrisch) **festlegbar sind,**
1.22 wobei zur **zylinderspezifischen** Steuerung des Verdichtungsverhältnisses je zwei Hohlräder (11) nach Merkmal 1.15.1 oder je zwei Sonnenräder (12) nach Merkmal 1.15.2 **ausschließlich zu jeder** Kurbellwellenkröpfung vorliegen müssen, **wobei eine einheitliche** Steuerung des Verdichtungsverhältnisses für alle Zylinder ebenfalls möglich ist, wenn alle Hohlräder (11) bzw. Sonnenräder (12) des Motors gleichermaßen angesteuert sind.

2. Brennkraftmaschine mit Kurbeltriebvariante HR_PSR_intern_2U mit den folgenden Merkmalen::
1.1 bis 1.15, 1.15.1, 1.16, 1.16.1, 1.17, 1.17.1, 1.17.2, 1.18, 1.18.1, 1.19, 1.19.1, 1.19.2, 1.20, 1.20.1, 1.20.1.1, 1.20.1.3, 1.21 und 1.22.

3. Brennkraftmaschine mit Kurbeltriebvariante HR_PSR_intern_1U mit den folgenden Merkmalen:
1.1 bis 1.15, 1.15.1, 1.16, 1.16.1, 1.17, 1.17.1, 1.17.2, 1.18, 1.18.1, 1.19, 1.19.1, 1.19.2, 1.20, 1.20.2, 1.20.2.1, 1.20.2.3, 1.21 und 1.22.

4. Brennkraftmaschine mit Kurbeltriebvarianten HR_PSR_extern_1U bzw. HR_PSR_mixt_1U
4.1 mit den folgenden Merkmalen:
1.1 bis 1.15, 1.15.1, 1.16, 1.16.1, 1.17, 1.17.1, 1.17.2, 1.18, 1.18.2 bzw. 1.18.3, 1.19, 1.19.1, 1.19.2, 1.20, 1.20.2, 1.20.2.1, 1.20.2.3, 1.21 und 4.2,
4.2 wobei, falls nur eine ausschließlich einheitliche Steuerung des Verdichtungsverhältnisses für alle Zylinder erwünscht ist, lässt sich die Anzahl der Hohlräder (11) zur Vereinfachung der Konstruktion auf die Anzahl der Kurbelwellenkröpfungen plus Eins reduzieren, damit ist eine zylinderspezifische Steuerung des Verdichtungsverhältnisses in diesen Konstruktionsvarianten nicht mehr möglich.

5. Brennkraftmaschine mit Kurbeltriebvariante SR_PSR_extern_2U mit den folgenden Merkmalen::
1.1 bis 1.15, 1.15.2, 1.16, 1.16.1, 1.17, 1.17.1, 1.17.2, 1.18, 1.18.2, 1.19, 1.19.1, 1.19.2, 1.20, 1.20.1 und 1.20.1.2, 1.20.1.3, 1.21 und 1.22.

6. Brennkraftmaschine mit Kurbeltriebvariante SR_PSR_extern_1U mit den folgenden Merkmalen:
1.1 bis 1.15, 1.15.2, 1.16, 1.16.1, 1.17, 1.17.1, 1.17.2, 1.18, 1.18.2, 1.19, 1.19.1, 1.19.2, 1.20, 1.20.2, 1.20.2.2, 1.20.2.3, 1.21 und 1.22.

7. Brennkraftmaschine mit Kurbeltriebvariante SR_PHR_extern_2U mit den folgenden Merkmalen:
1.1 bis 1.15, 1.15.2, 1.16, 1.16.2, 1.17, 1.17.1, 1.17.2, 1.18, 1.18.2, 1.19, 1.19.1, 1.19.2, 1.20, 1.20.1, 1.20.1.2, 1.20.1.3, 1.21 und 1.22.

8. Laststeuerung einer Brennkraftmaschine nach Anspruch 1 bis 7 **dadurch gekennzeichnet, dass**
8.1 kleine und mittlere Lasten,
8.1.1 weitgehend ohne Drosselung und/oder Abmagerung des Gemisches,
8.1.2 durch Verstellung des Kurbeltriebs nach Merkmal 1.21 in einer geeigneten Richtung,
8.1.3 wobei gleichzeitig
8.1.3.1 das Verdichtungsverhältnis und das Expansionsverhältnis sich erhöhen, sodass der thermische Wirkungsgrad des Kreisprozesses zunimmt,
8.1.3.2 der Ansaughub sich verkürzt, sodass weniger frische Ladung in die Zylinder gesaugt wird, und
8.1.3.3 sich der Ausschiebehub verkürzt und das Ausschiebeverhältnis sich verkleinert, sodass der Restgasanteil in den Zylindern ansteigt und damit noch weniger frische Ladung in die Zylinder gesaugt wird, und
8.2 höhere und Voll-Lasten,
8.2.1 weitgehend ohne notwendige Entdrosselung und/oder Anfetten des Gemisches,
8.2.2 durch Verstellung des Kurbeltriebs nach Merkmal 1.21 in entgegengesetzter Richtung zu den von Merkmal 8.1.2
8.2.3 wobei gleichzeitig
8.2.3.1 das Verdichtungsverhältnis und das Expansionsverhältnis sich verringern, sodass die oberen Grenzen für Zylinderdruck und Zylindertemperatur bezogen auf dem Kreisprozess eingehalten werden können,
8.2.3.2 sich der Ansaughub verlängert, sodass mehr frische Ladung in die Zylinder gesaugt werden kann, und
8.2.3.3 sich der Ausschiebehub verlängert und das Ausschiebeverhältnis sich erhöht, sodass der Restgasanteil in den Zylindern abnimmt und damit noch mehr frische Ladung in die Zylinder gesaugt werden kann,
erreicht werden können.

9. Zylinderabschaltung einer Brennkraftmaschine nach Anspruch 1 mit Kurbeltriebvarianten nach Ansprüchen 2 bis 3 und 5 bis 7 und mit Laststeuerung nach Anspruch 8
**dadurch gekennzeichnet, dass**
9.1 der Kurbeltriebteil der abgeschalteten Zylinder
9.1.1 die zylinderspezifische Steuerung des Verdichtungsverhältnisses nach Merkmal 1.22 erlaubt und
9.1.2 nach Merkmal 8.2.2 derart verstellt wird,
9.1.3 um das Verdichtungsverhältnis sehr stark zu reduzieren,
9.1.4 mit dem Ziel die Schlepp- und Reibungsarbeiten dieser Zylinder stark zu reduzieren,
9.2 wobei in den abgeschalteten Zylindern
9.2.1 zur Minderung des Kraftstoffverbrauchs die Kraftstoffzufuhr unterbrochen wird,
9.2.2 und die angesaugte frische Ladungsmasse wunschgemäß,
9.2.2.1 im Vergleich zu den nicht abgeschalteten Zylindern,
9.2.2.2 trotzt verlängertem Ansaughub nach Merkmal 8.2.3.2,
9.2.2.3 durch zylinderspezifische optimal gesteuerte Drosselung
9.2.2.3.1 entweder in den Ansaugkanälen anhand von speziell dafür eingesetzten Drosselklappen
9.2.2.3.2 oder in den Ansaugkanälen anhand von schon vorhandenen Drall- bzw. Tumble-Klappen
9.2.2.3.3 oder zusätzlich an den Ansaugventilen anhand einer variablen Ventilsteuerung
9.2.3 reduziert wird,
9.2.4 mit dem Ziel die Schlepp- und Reibungsarbeiten der abgeschalteten Zylinder zu minimieren.

## Claims

1. **Internal combustion engine**
**1.1. with several cylinders**
1.2. in line, boxer, V, X or star cylinder arrangement, at what one or more connecting rods are articulated together on a single crankpin,
1.3. working
1.3.1. according to a four-stroke process,
1.3.2. after a real Atkinson cycle, where the compression stroke being shorter than the expansion stroke,
**1.4. operated**
1.4.1. naturally aspirated or
1.4.2. supercharged
1.4.3. with spark ignition, compression ignition or mixed ignition variant,
1.4.4. with either constant or variable compression ratios,
1.5. where the crankshaft of the crank mechanism consists of several components, i.e. it is designed as a so-called built crankshaft,
1.6. the crank drive part of a cylinder or, for example, a pair of cylinders in a V-cylinder arrangement according to feature 1.2 consists of a crankshaft crank, an eccentric crank and a planetary gear,
1.7. the planetary gear synchronizes the rotations of the crankshaft crank around the longitudinal axis of the crankshaft (2) and of the eccentric crank around the longitudinal axis of the crankpin (3) and it enables or forces the torque transmission between the two cranks,
1.8. each crank pin consists of two separate half crank pins (7),
1.9. the half crank pins (7) belong to both the crankshaft crank and the eccentric crank,
1.10. each crankshaft crank consists of two shaft pins (5), crank webs (6) and half crank pins (7),
1.11. a shaft pin (5) and a crank web (6)
1.11.1. are firmly connected,
1.11.2. or merged to form a component (5+6), in order to reduce the length of the crank mechanism, as well as to enable the use of roller bearings (18),
1.12. each eccentric crank consists of an eccentric pin (9), two eccentric webs (8) and two half-crank pins (7),
1.13. Each half-crank pin (7) is radially bearing either in the eccentric webs (8) or in the crank webs (6), or its radial bearing is also possible in both webs, but this is not sensible (due to the reduced torsional stiffness of the crank mechanism),
1.14. the half crank pins (7) form the webs of the planetary gear and thus carry the planet gears (10),
1.15. for fulfilling the feature 1.7 the planetary gears used can convenient be incompletely formed, where
1.15.1. either the sun gears may be omitted and only the ring gears (**HR**) remain,
1.15.2. or the ring gears may be omitted and only the sun gears (**SR**) remain,
1.16. the planet gears (10)
1.16.1. can be designed as either spur gears (**PSR**)
1.16.2. or ring gears (**PHR**),
1.17. the planet gears (10) and the eccentric webs (8) driving the eccentric crank
1.17.1. are firmly connected,
1.17.2. but can be combined into one component (8+10),
1.18. the two planet gears (10) of an eccentric crank in relation to the position of the crank webs (6) of a crankshaft crank are arranged
1.18.1. both inside (internal),
1.18.2. both outside (external) or
1.18.3. one planet gear inside and the other outside (mixed),
1.19. the ring gears (11) according to feature 1.15.1 or the sun gears (12) according to feature 1.15.2 of the planetary gear
1.19.1. are radially bearing in the crankcase (15),
1.19.2. however, they can be held by means of lever eyes (13) in a **zero position,** in which pairwise the suction and compression strokes on the one hand and the expansion and exhaust strokes on the other hand are of equal length (i.e. semi-symmetrical),
1.20. the transmission ratio and the synchronization between the gears of the planetary gear to create the necessary four piston strokes of the four-stroke process are selected in such a way as
1.20.1. either to force only one rotation of the planet gears (10) after two crankshaft rotations (**2U**) so that
1.20.1.1. the ratio between the planet gears (10) and ring gears (11) is **2:3** according to feature 1.15.1,
1.20.1.2. the ratio between planet gears (10) and sun gears (12) is **2:1** according to feature 1.15.2,
1.20.1.3. wherein for synchronization purposes, the eccentric crank must be directed perpendicularly to the crankshaft crank when the crankshaft crank is directed towards TDC and the lever eyes (13) are in the zero position according to feature 1.19.2,
1.20.2. or to force two rotations of the planet gears (10) after a single rotation of the crankshaft (**1U**) so that
1.20.2.1. the ratio between planet gears (10) and ring gears (11) is **1:3** according to feature 1.15.1,
1.20.2.2. the ratio between planet gears (10) and sun gears (12) is **1:1** according to feature 1.15.2,
1.20.2.3. where for synchronization purpose the eccentric crank must be directed against the crankshaft crank when the crankshaft crank is directed towards TDC and the lever eyes (13) are in the zero position according to feature 1.19.2,
**Characterized in that**
1.21. by means of slight controllable rotations about the shaft longitudinal axis (2) of the ring gears (11) according to feature 1.15.1 or of the sun gears (12) according to feature 1.15.2 with respect to their zero positions by applying force on the lever eyes (13) are the changes of the compression ratio (and at the same time of the volume ratios in relation to suction, expansion and exhaust) and of all four piston strokes (i.e. fully asymmetrical) established,
1.22 wherein for **cylinder-specific control** of the compression ratio, two ring gears (11) according to feature 1.15.1 or two sun gears (12) according to feature 1.15.2 must be present exclusively at each crankshaft crank, where an **uniform control** of the compression ratio for all cylinders is achieved when all ring gears (11) or sun gears (12) of the engine are identically controlled,

2. **Internal combustion engine with crank drive variant HR_PSR_intern_2U characterized by the following features:** 1.1 to 1.15, 1.15.1, 1.16, 1.16.1, 1.17, 1.17.1, 1.17.2, 1.18, 1.18.1, 1.19, 1.19.1, 1.19.2, 1.20, 1.20.1, 1.20.1.1, 1.20.1.3, 1.21 and 1.22.

3. **Internal combustion engine with crank drive variants HR_PSR_intern_1U characterized by the following features:** 1.1 to 1.15, 1.15.1, 1.16, 1.16.1, 1.17, 1.17.1, 1.17.2, 1.18, 1.18.1, 1.19, 1.19.1, 1.19.2, 1.20, 1.20.2, 1.20.2.1, 1.20.2.3, 1.21 and 1.22.

4. **Internal combustion engine with crank drive variants HR_PSR_extern_1U respective HR_PSR_mixt_1U**
4.1. **characterized by the following features:** 1.1 to 1.15, 1.15.1, 1.16, 1.16.1, 1.17, 1.17.1, 1.17.2, 1.18, 1.18.2 resp. 1.18.3, 1.19, 1.19.1, 1.19.2, 1.20, 1.20.2, 1.20.2.1, 1.20.2.3, 1.21 and 4.2,
4.2 when only an **exclusively uniform type of control** for the compression ratio **for all cylinders** is intended, the number of ring gears (11) can be reduced to the number of crankshaft cranks plus one for **simplifying** the design, thereby in these design variants the use of **cylinder-specific control** of the compression ratio **is precluded.**

5. **Internal combustion engine with crank drive variant SR_PSR_extern_2U characterized by the following features:** 1.1 to 1.15, 1.15.2, 1.16, 1.16.1, 1.17, 1.17.1, 1.17.2, 1.18, 1.18.2, 1.19, 1.19.1, 1.19.2, 1.20, 1.20.1 und 1.20.1.2, 1.20.1.3, 1.21 and 1.22.

6. **Internal combustion engine with crank drive variant SR_PSR_extern_1U characterized by the following features:** 1.1 to 1.15, 1.15.2, 1.16, 1.16.1, 1.17, 1.17.1, 1.17.2, 1.18, 1.18.2, 1.19, 1.19.1, 1.19.2, 1.20, 1.20.2, 1.20.2.2, 1.20.2.3, 1.21 and 1.22.

7. **Internal combustion engine with crank drive variant SR_PHR_extern_2U characterized by the following features:** 1.1 to 1.15, 1.15.2, 1.16, 1.16.2, 1.17, 1.17.1, 1.17.2, 1.18, 1.18.2, 1.19, 1.19.1, 1.19.2, 1.20, 1.20.1, 1.20.1.2, 1.20.1.3, 1.21 and 1.22.

8. **Load control of an internal combustion engine according to claim 1 to 7**
**characterized in that**
8.1. small and medium loads,
8.1.1 largely without throttling and / or leaning the mixture,
8.1.2 by adjusting the crank mechanism according to feature 1.21 in a suitable direction,
8.1.3 while at the same time
8.1.3.1 the compression ratio and the expansion ratio increase so that the thermal efficiency of the cycle increases,
8.1.3.2 the suction stroke is shortened so that less fresh charge is sucked into the cylinders, and
8.1.3.3 the exhaust stroke is shortened, while the exhaust ratio decreases so that the residual gas content in the cylinders increases and, thus even less fresh charge is sucked into the cylinders, and
8.2. high and full loads,
8.2.1 largely without the dethrottling and / or enrichment of the mixture being necessary,
8.2.2 by adjusting the crank mechanism according to feature 1.21 in the opposite direction to that of feature 8.1.2
8.2.3 where at the same time
8.2.3.1 the compression ratio and the expansion ratio decrease so that the upper limits for cylinder pressure and cylinder temperature on the cycle can be preserved,
8.2.3.2 the suction stroke is extended, so that more fresh charge can be sucked into the cylinders, and
8.2.3.3 the exhaust stroke is extended and the exhaust ratio increases, so that the residual gas content in the cylinders decreases and thus more fresh charge can be sucked into the cylinders.

9. **Cylinder deactivation of an internal combustion engine according to claim 1, with crank drive variants according to claims 2 to 3 and 5 to 7, and with load control according to claim 8,**
**characterized in that**
9.1 the crank drive part of the deactivated cylinders
9.1.1 allows cylinder-specific control of the compression ratio according to feature 1.22 and
9.1.2 is adjusted according to feature 8.2.2,
9.1.3 in order to obtain a strong reduction of the compression ratio,
9.1.4 with the aim of greatly reducing the drag and friction work of these cylinders,
9.2 where in the deactivated cylinders
9.2.1 the fuel supply is interrupted to reduce fuel consumption,
9.2.2 and the fresh charge mass is sucked in as desired,
9.2.2.1 compared to the cylinder that were not deactivated,
9.2.2.2 despite the extended suction stroke according to feature 8.2.3.2,
9.2.2.3 by means of cylinder-specific, optimally controlled throttling
9.2.2.3.1 either in the intake channels, by means of specially designed throttle valves
9.2.2.3.2 or in the intake ducts, using existing swirl or tumble flaps that are already available
9.2.2.3.3 or additionally at the intake valves by means of a variable valve control
9.2.3 is reduced,
9.2.4 with the aim of minimizing the drag and friction work of the deactivated cylinders.

## Revendications

1. **Moteur à combustion interne**
**1.1. avec plusieurs cylindres**
1.2. en ligne, boxer, V, X ou cylindre en étoile, une ou plusieurs bielles étant articulées ensemble sur un seul maneton,
1.3. travaillant
1.3.1. en utilisant un cycle á quatre temps,
1.3.2. après un véritable cycle Atkinson, la course de compression étant courte que la course d'expansion,
1.4. **exploité**
1.4.1. avec aspiration libre ou
1.4.2. suralimenté,
1.4.3. à allumage commandé, allumage par compression ou allumage mixte,
1.4.4. à taux de compression constant ou variable,
1.5. dans lequel le vilebrequin du mécanisme de manivelle se compose de plusieurs composants, à savoir il est conçu comme un vilebrequin dit assemblé,
1.6. la partie du mécanisme de manivelle d'un cylindre ou, par exemple, d'une paire de cylindres en V selon la caractéristique 1.2 se compose d'une partie coudée de vilebrequin, d'une partie coudée d'excentrique et d'un engrenage planétaire,
1.7. l'engrenage planétaire synchronise les mouvements de rotation du vilebrequin autour de son l'axe longitudinal (2) et de l'excentrique autour de l'axe longitudinal du tourillon (3) et permet ou force la transmission du couple entre les deux,
1.8. chaque tourillon se compose de deux demi-tourillons séparés (7),
1.9. les demi-tourillons (7) appartiennent à la fois au partie coudée du vilebrequin et à la partie coudée d'excentrique,
1.10. chaque coudée de vilebrequin se compose de deux tourillons d'arbre (5), des bras de manivelle (6) et des demi-tourillons (7),
1.11. un tourillon d'arbre (5) et un bras de manivelle (6)
1.11.1. sont solidement connectés,
1.11.2. ou sont fusionné pour former un seul élément (5+6) afin, d'une part, de réduire la longueur du mécanisme à manivelle et, d'autre part, de permettre l'utilisation de roulements (18),
1.12. chaque coudée d'excentrique se compose d'un maneton excentrique (9), de deux bras de manivelle excentriques (8) et de deux demi-tourillons (7),
1.13. chaque demi-tourillons (7) est supporté radialement soit dans les bras de manivelle excentriques (8) soit dans les bras de manivelle (6), où il est possible de le supporter radialement dans les deux bras de manivelle mais pas utile (en raison de la réduction de la rigidité en torsion du mécanisme de la manivelle),
1.14. les demi-tourillons (7) forment le porteurs des roues planétaire (10) et servent donc à les entraîner,
1.15. les engrenages planétaires utilisés peuvent opportunément être incomplètement conçus pour remplir la caractéristique 1.7, lorsque,
1.15.1. soit les roues solaires peuvent être omis et seuls les roues à denture intérieure (**HR**) restent,
1.15.2. ou les roues à denture intérieure peuvent être omis et seuls les roues solaires (**SR**) restent,
1.16. les roues planétaires (10) sont exécutés
1.16.1. soit comme engrenages droits (**PSR**)
1.16.2. soit comme roues à denture intérieure (**PHR**)
1.17. les roues planétaires (10) et les bras de manivelle excentriques (8) pour l'entraînement de la coudée d'excentrique
1.17.1. sont solidement connectés,
1.17.2. ou sont fusionné pour former un seul élément (8+10),
1.18. les deux roues planétaires (10) d'une coudée d'excentrique par rapport à la position des bras de manivelle (6) d'une coudée de vilebrequin sont disposés
1.18.1. soit les deux à l'intérieur (interne),
1.18.2. soit les deux à l'extérieur (externe), ou
1.18.3. un mélange entre les deux, une à l'intérieur et l'autre à l'extérieur,
1.19. les roues à denture intérieure (11) selon la caractéristique 1.15.1 ou les roues solaires (12) selon la caractéristique 1.15.2 de l'engrenage planétaire
1.19.1. sont supportés radialement dans le carter (15),
1.19.2. mais peut être maintenu en position zéro au moyen d'œillets d'articulation (13), dans lesquels les courses d'aspiration et de compression d'une part et les courses d'expansion et d'échappement d'autre part sont de longueur égale (c'est-à-dire semi-symétriques),
1.20. le rapport de transmission et la synchronisation entre les engrenages du train planétaire pour produire les quatre courses de piston nécessaires au processus à quatre temps sont choisis de manière à
1.20.1. soit de forcer une seule révolution des roues planétaires (10) après deux tours de vilebrequin (**2U**) de sorte que
1.20.1.1. le rapport entre les roues planétaires (10) et les roues à denture intérieure (11) selon la caractéristique 1.15.1 est **2:3,**
1.20.1.2. le rapport entre les roues planétaires (10) et les roues solaires (12) selon la caractéristique 1.15.2 est **2:1,**
1.20.1.3. selon lequel, pour la synchronisation, la manivelle excentrique doit être orientée perpendiculairement à la manivelle du vilebrequin lorsque celle-ci est dirigée vers le PMH et que d'œillets d'articulation (13) sont en position zéro, selon la caractéristique 1.19.2,
1.20.2. soit de forcer deux révolutions des roues planétaires (10) après une seule révolution (**1U**) du vilebrequin de sorte que
1.20.2.1. le rapport de transmission entre les roues planétaires (10) et les roues à denture intérieure (11) selon la caractéristique 1.15.1 est en conséquence de **1:3,**
1.20.2.2. le rapport de transmission entre les roues planétaires (10) et les roues solaires (12) selon la caractéristique 1.15.2 est en conséquence de **1:1,**
1.20.2.3. ou, pour la synchronisation, la manivelle excentrique doit être dirigée dans le sens opposé à la manivelle de vilebrequin lorsque la manivelle de vilebrequin est dirigée vers le PMH et les œillets d'articulation (13) sont en position zéro comme défini dans la caractéristique 1.19.2,
**caractérisé en ce que**
1.21. tant la modification du taux de compression (et en même temps des rapports volumétriques, en ce qui concerne l'aspiration, la dilatation et l'échappement) que les quatre courses du piston (c'est-à-dire totalement asymétriques) peuvent être déterminées par de légères rotations contrôlables autour de l'axe longitudinal de vilebrequin (2) des roues à denture intérieure (11) selon la caractéristique 1.15.1 ou des roues solaires (12) selon la caractéristique 1.15.2 par rapport à leurs positions zéro par l'action d'une force sur les œillets d'articulation (13),
1.22 dans lequel, pour une commande du taux de compression spécifique au cylindre, deux roues à denture intérieure (11) selon la caractéristique 1.15.1 ou deux roues solaires (12) selon la caractéristique 1.15.2 doivent être présents exclusivement à chaque partie coudée du vilebrequin, une commande uniforme du taux de compression pour tous les cylindres étant également possible si toutes les roues à denture intérieure (11) ou tous les roues solaires (12) du moteur sont commandés de la même manière.

2. **Moteur à combustion interne avec variante du mécanisme de manivelle HR_PSR_intern_2U ayant les caractéristiques suivantes** : 1.1 à 1.15, 1.15.1, 1.16, 1.16.1, 1.17, 1.17.1, 1.17.2, 1.18, 1.18.1, 1.19, 1.19.1, 1.19.2, 1.20, 1.20.1, 1.20.1.1, 1.20.1.3, 1.21 et 1.22.

3. **Moteur à combustion interne avec variante du mécanisme de manivelle HR_PSR_intern_1U ayant les caractéristiques suivantes** : 1.1 à 1.15, 1.15.1, 1.16, 1.16.1, 1.17, 1.17.1, 1.17.2, 1.18, 1.18.1, 1.19, 1.19.1, 1.19.2, 1.20, 1.20.2, 1.20.2.1, 1.20.2.3, 1.21 et 1.22.

4. Moteur à combustion interne avec variante du mécanisme de manivelle **HR_PSR_extern_1U respectivement HR_PSR_mixt_1U**
**4.1 ayant les caractéristiques suivantes** : 1.1 à 1.15, 1.15.1, 1.16, 1.16.1, 1.17, 1.17.1, 1.17.2, 1.18, 1.18.2 ou 1.18.3, 1.19, 1.19.1, 1.19.2, 1.20, 1.20.2, 1.20.2.1, 1.20.2.3, 1.21 et 1.22.
4.2 où, si seulement un contrôle exclusivement uniforme du taux de compression est souhaité pour tous les cylindres, le nombre des roues à denture intérieure (11) peut être réduit au nombre de parties coudée de vilebrequin plus un, pour simplifier la conception, de sorte qu'un contrôle spécifique au cylindre du taux de compression n'est plus possible dans ces variantes de conception.

5. **Moteur à combustion interne avec variante du mécanisme de manivelle SR_PSR_extern_2U ayant les caractéristiques suivantes** : 1.1 à 1.15, 1.15.2, 1.16, 1.16.1, 1.17, 1.17.1, 1.17.2, 1.18, 1.18.2, 1.19, 1.19.1, 1.19.2, 1.20, 1.20.1 und 1.20.1.2, 1.20.1.3, 1.21 et 1.22.

6. **Moteur à combustion interne avec variante du mécanisme de manivelle SR_PSR_extern_1U ayant les caractéristiques suivantes** : 1.1 à 1.15, 1.15.2, 1.16, 1.16.1, 1.17, 1.17.1, 1.17.2, 1.18, 1.18.2, 1.19, 1.19.1, 1.19.2, 1.20, 1.20.2, 1.20.2.2, 1.20.2.3, 1.21 et 1.22.

7. **Moteur à combustion interne avec variante du mécanisme de manivelle SR_PHR_extern_2U ayant les caractéristiques suivantes** : 1.1 à 1.15, 1.15.2, 1.16, 1.16.2, 1.17, 1.17.1, 1.17.2, 1.18, 1.18.2, 1.19, 1.19.1, 1.19.2, 1.20, 1.20.1, 1.20.1.2, 1.20.1.3, 1.21 et 1.22.

8. **Contrôle de la charge d'un moteur à combustion interne selon les revendications 1 à 7**
**caractérisé en ce que**
8.1 petites et moyennes charges,
8.1.1. largement sans étranglement et/ou amaigrissement de mélange
8.1.2. en réglant le mécanisme à manivelle selon la caractéristique 1.21 dans une direction appropriée,
8.1.3. tout en
8.1.3.1 le taux de compression et le taux d'expansion augmentent de sorte que l'efficacité thermique du cycle augmente
8.1.3.2. la course d'admission est raccourcie de manière à aspirer moins de charge frais dans les cylindres ; et
8.1.3.3. la course d'échappement est raccourcie et le taux d'éjection est réduit, de sorte que la teneur en gaz résiduel dans les cylindres augmente et donc encore moins de charge fraîche est aspirée dans les cylindres, et
8.2 charges supérieurs et pleine charge,
8.2.1. en grande partie sans dethrottling et / ou enrichissement nécessaires du mélange,
8.2.2. en ajustant le mécanisme de manivelle selon la caractéristique 1.21 dans le sens opposé à celui de la caractéristique 8.1.2
8.2.3 par lequel simultanément
8.2.3.1. le taux de compression et le taux d'expansion diminuent de sorte que les limites supérieures de la pression et de la température dans les cylindres puissent être maintenues par rapport au cycle,
8.2.3.2. la course d'admission est prolongée pour permettre d'aspirer davantage de charge frais dans les cylindres ; et
8.2.3.3. la course d'échappement est allongée et le rapport d'échappement est augmenté, de sorte que la teneur en gaz résiduel dans les cylindres diminue et que on peut ainsi aspirer de charge frais encore plus importante dans les cylindres.

9. **Désactivation des cylindres d'un moteur à combustion interne selon la revendication 1 avec des variantes du mécanisme de manivelle selon les revendications 2 à 3 et 5 à 7 et avec contrôle de la charge selon la revendication 8**
**caractérisé en ce que**
9.1 la partie du mécanisme de manivelle des cylindres désactivés
9.1.1 permet un contrôle du taux de compression spécifique au cylindre selon la caractéristique 1.22 et
9.1.2. est ajusté conformément à la caractéristique 8.2.2,
9.1.3 pour réduire fortement le taux de compression,
9.1.4. dans le but de réduire considérablement le travail de traînée et de friction de ces cylindres,
9.2. où dans les cylindres désactivés
9.2.1. l'alimentation en carburant est interrompue pour réduire la consommation de carburant,
9.2.2 et la masse de la charge fraîche est aspirée comme souhaité,
9.2.2.1. par rapport aux cylindres qui ne sont pas désactivés,
9.2.2.2. malgré une course d'admission prolongée selon la caractéristique 8.2.3.2,
9.2.2.3. grâce à un étranglement contrôlé de manière optimale spécifique au cylindre
9.2.2.3.1. soit dans les conduits d'admission au moyen de clapets d'étranglement spécialement conçus
9.2.2.3.2 ou dans les conduits d'admission en fonction des volets tourbillonnants ou à tambour existants
9.2.2.3.3. ou, en outre, aux soupapes d'admission au moyen d'une commande de soupape variable
9.2.3 est réduit,
9.2.4. dans le but de minimiser la traînée et le travail de friction des cylindres désactivés.
